(19) Europäisches Patentamt
European Patent Office
Office européen des brevets

(11) EP 2 080 543 A2

(12) EUROPEAN PATENT APPLICATION

(43) Date of publication:
22.07.2009 Bulletin 2009/30

(51) Int Cl.:
*A63F 13/10* (2006.01)

(21) Application number: 09005416.4

(22) Date of filing: 20.06.2006

(84) Designated Contracting States:
AT BE BG CH CY CZ DE DK EE ES FI FR GB GR HU IE IS IT LI LT LU LV MC NL PL PT RO SE SI SK TR

(30) Priority: 12.09.2005 JP 2005264207

(62) Document number(s) of the earlier application(s) in accordance with Art. 76 EPC:
06012611.7 / 1 762 287

(71) Applicant: NINTENDO CO., LTD.
Kyoto 601-8501 (JP)

(72) Inventors:
• Ohta, Keizo
Kyoto-shi
Kyoto 601-8501 (JP)

• Sato, Kenta
Kyoto-shi
Kyoto 601-8501 (JP)

(74) Representative: Altenburg, Udo et al
Patent- und Rechtsanwälte
Bardehle . Pagenberg . Dost . Altenburg .
Geissler
Galileiplatz 1
81679 München (DE)

Remarks:
This application was filed on 16-04-2009 as a divisional application to the application mentioned under INID code 62.

(54) **Information processing program**

(57) A game system comprises image obtaining means, direction calculation means, first rotation means, and display control means. The image obtaining means obtains an image taken by an imaging device. The direction calculation means calculates a direction originally determined from the image of an imaging target included in the image taken by the imaging device. The first rotation means rotates an operation target in accordance with the calculated direction. The display control means generates an image in accordance with the rotation of the operation target performed by the first rotation means and displays the generated image on a screen of a display device.

Fig. 7

**Description**

BACKGROUND OF THE INVENTION

Field of the Invention

The present invention relates to an information processing program, and more particularly to an information processing program usable for an information processing system operated by a user using an input device including an imaging device.

Description of the Background Art

Conventionally, technologies for designating a specific position on a display screen using an optical pointing system have been proposed. For example, an optical pointing system described in Japanese Laid-Open Patent Publication No. 6-308879 is used for conferences or the like held for a plurality of viewers. According to this system, a light emitting element is provided in the vicinity of the display screen, and an imaging device using an optic/electric conversion element is built in an indicator. The user can designate an arbitrary position on the display screen using the indicator as follows. The indicator takes an image of the light emitting element by the imaging device and the position designated by the user is calculated based on the obtained image. A mark is displayed at the calculated position, and thus the designated position is indicated with the mark.

A game controller which uses an optical pointing system substantially the same as the above has been proposed (see, for example, Japanese Laid-Open Patent Publication No. 8-71252). The controller has a shape of a gun and is used for a shooting game. The shooting game is for shooting a target displayed on the screen with a gun. The gun is used for designating an arbitrary position (to which the bullet is to hit) on the screen. The gun-shaped controller has a built-in CCD camera, and light emitting elements located at four positions around the screen are imaged by the CCD camera. The controller calculates the rotation angle or the inclining angle of the gun using the obtained images. The controller uses the calculation result to detect whether or not the gun is correctly directed toward the target displayed on the screen, and thus determines whether or not the bullet has hit the target. With such a structure, a game system by which the player performs a game operation by moving the controller (gun) held in his/her hand can be realized.

With the above-described technologies, the input device held in the user's hand (the indicator or the gun-shaped controller) is only used for designating a position on the display screen. Namely, the above-described indicator or gun-shaped controller allows the player to perform only one operation of designating a position on the display screen but not any other operation. For example, when used for a game apparatus, such an input device allows the player to perform only one simple game operation of designating a position on the display screen. Since the game operation is so simple that the game itself is simple and is not entertaining.

SUMMARY OF THE INVENTION

Therefore, an object of the present invention is to provide an information processing system allowing the user to perform a new type of operation using an input device held in his/her hand and a program used for such an information processing system.

The present invention has the following features to attain the object mentioned above. The reference numerals, additional explanations and the like in parentheses in this section of the specification indicate the correspondence with the embodiments described later for easier understanding of the present invention and do not limit the present invention in any way.

A first aspect of the present invention is directed to a computer readable storage medium having stored thereon an information processing program executable by a computer (CPU 10, etc.) of an information processing apparatus (game apparatus 3). The information processing apparatus receives operation data from an operation device (controller 7) including imaging means (imaging element 40) for taking an image of an imaging target (markers 8a and 8b), and displays, on a display device (monitor 2), a virtual space obtained by performing calculation processing on a predetermined operation target (player object 71, key 76, virtual camera 81, or door knobs 85a or 86a) using the operation data. The information processing program causes the computer to execute an obtaining step (S1), a vector calculation step (S16), a first rotation step (S3) and a display step (S4). The obtaining step obtains a taken image taken by the imaging means of the operation device as the operation data. The vector calculation step calculates a two-dimensional vector (vector represented by direction data 57) using a position of the imaging target in the taken image. The first rotation step rotates the operation target in accordance with a calculated value of the two-dimensional vector. The display step displays the virtual space, changed in accordance with the rotation of the operation target in the first rotation step, on a display area of the display device.

According to a second aspect of the present invention, the vector calculation step may include a first calculation step and a second calculation step. The first calculation step calculates coordinate sets of two predetermined points in the image of the imaging target in a coordinate system corresponding to the taken image. The second calculation step calculates the two-dimensional vector connecting the coordinate sets of the two predetermined points.

A third aspect of the present invention is directed to a computer readable storage medium having stored thereon an information processing program executable by a computer (CPU 10, etc.) of an information processing apparatus (game apparatus 3). The information processing apparatus receives operation data from an operation device (controller 7) and displays, on a display device (monitor 2), a virtual space obtained by performing calculation processing on a predetermined operation target (player object 71, key 76, virtual camera 81, or door knobs 85a and 86a) using the operation data. The operation device includes imaging means (imaging element 40) for taking an image of an imaging target and first calculation means (image processing circuit 41) for calculating coordinate sets of two predetermined points in the image of the imaging target included in a taken image taken by the imaging means. The information processing program causes the computer to execute an obtaining step (S1), a vector calculation step (S16), a first rotation step (S3) and a display step (S4). The obtaining step obtains the coordinate sets of the two predetermined points as the operation data. The vector calculation step calculates a two-dimensional vector connecting the coordinate sets of the two predetermined points. The first rotation step rotates the operation target in accordance with a calculated value of the two-dimensional vector. The display step displays the virtual space, changed in accordance with the rotation of the operation target in the first rotation step, on a display area of the display device.

A fourth aspect of the present invention is directed to a computer readable storage medium having stored thereon an information processing program executable by a computer (CPU 10, etc.) of an information processing apparatus (game apparatus 3). The information processing apparatus receives operation data from an operation device (controller 7) and displays, on a display device (monitor 2), a virtual space obtained by performing calculation processing on a predetermined operation target (player object 71, key 76, virtual camera 81, or door knobs 85a and 86b) using the operation data. The operation device includes imaging means (imaging element 40) for taking an image of an imaging target and vector calculation means (image processing circuit 41) for calculating a two-dimensional vector using a position of the imaging target in a taken image taken by the imaging means. The information processing program causes the computer to execute an obtaining step (S1), a first rotation step (S3) and a display step (S4). The obtaining step obtains the two-dimensional vector as the operation data. The first rotation step rotates the operation target in accordance with an obtained value of the two-dimensional vector. The display step displays the virtual space, changed in accordance with the rotation of the operation target in the first rotation step, on a display area of the display device.

According to a fifth aspect of the present invention, the information processing program may further cause the computer to execute an indicated coordinate set calculation step (S22, S52, S62). The indicated coordinate set calculation step calculates a predetermined indicated coordinate set (indicated coordinate set data 62) which corresponds to a position on the display area, in correspondence with a position of the image of the imaging target in the taken image obtained in the obtaining step. In this case, the first rotation step rotates the operation target by a calculation using the two-dimensional vector and the indicated coordinate set.

According to a sixth aspect of the present invention, the information processing program may further cause the computer to execute an indicated coordinate set calculation step (S22, S52, S62). The indicated coordinate set calculation step calculates a predetermined indicated coordinate set which corresponds to a position on the display area, in correspondence with a coordinate set of an intermediate point between the two predetermined points. In this case, the first rotation step rotates the operation target by a calculation using the two-dimensional vector and the indicated coordinate set.

According to a seventh aspect of the present invention, the operation data may further include a coordinate set of one point corresponding to a position of the image of the imaging target. In this case, the information processing program further causes the computer to execute an indicated coordinate set calculation step (S22, S52, S62). The indicated coordinate set calculation step calculates a predetermined indicated coordinate set which corresponds to a position on the display area, in correspondence with the coordinate set of the one point. The first rotation step rotates the operation target by a calculation using the two-dimensional vector and the indicated coordinate set.

According to an eighth aspect of the present invention, the indicated coordinate set calculation step may calculate the indicated coordinate set which corresponds to the position on the display area, in correspondence with a position of the image of the imaging target in the case where the image taken by the imaging means is rotated around the center of the image as an axis and the two-dimensional vector is directed in one certain direction by the rotation.

According to a ninth aspect of the present invention, the information processing program may further cause the computer to execute an indicated coordinate set calculation step (S22, S52, S62). The indicated coordinate set calculation step sets a predetermined indicated coordinate set which corresponds to a position on the display area as an indicated coordinate set. The first rotation step rotates the operation target by a calculation using the two-dimensional vector and the indicated coordinate set.

According to a tenth aspect of the present invention, the virtual space may be a virtual three-dimensional space.

In this case, the information processing program further causes the computer to execute a three-dimensional indicated coordinate set setting step (S53). The three-dimensional indicated coordinate set setting step calculates a three-dimensional coordinate set in the virtual space which corresponds to the indicated coordinate set calculated in the indicated coordinate set calculation step and sets the three-dimensional coordinate set as a three-dimensional indicated coordinate set. In this case, the first rotation step rotates the operation target in the three-dimensional space by a calculation using the two-dimensional vector and the three-dimensional indicated coordinate set.

According to an eleventh aspect of the present invention, the information processing program may further cause the computer to execute an object location step (S31, S41, S60). The object location step locates at least one object in the virtual space. The first rotation step rotates any one of the at least one object located in the virtual space as the operation target.

According to a twelfth aspect of the present invention, the information processing program may further cause the computer to execute an object location step (S31, S41, S60). The object location step locates at least one object in the virtual space. In this case, the first rotation step may include a determination step (S64) of determining whether or not any one of the at least one object is displayed at the position on the display area which corresponds to the indicated coordinate set; an operation target setting step (S65) of, when it is determined that one of the at least one object is displayed at the position which corresponds to the indicated coordinate set, setting the one object as the operation target; and a step (S21) of rotating the one object which is set in the operation target setting step.

According to a thirteenth aspect of the present invention, the information processing program may further cause the computer to execute an object location step (S31, S41, S60). The object location step locates an object as the operation target in the virtual space. In this case, the first rotation step includes an obj ect moving step (S21) of moving the obj ect so as to be displayed at a position of the indicted coordinate set calculated in the indicated coordinate set calculation step; and a step (S22) of rotating the object.

According to a fourteenth aspect of the present invention, the information processing program may further cause the computer to execute an object location step (S31, S41, S60). The object location step locates an object as the operation target in the virtual space. In this case, the first rotation step includes an object moving step (S21) of moving the object to the three-dimensional coordinate set (corresponding coordinate set) calculated in the three-dimensional indicated coordinate set setting step; and a step (S22) of rotating the object.

According to a fifteenth aspect of the present invention, the information processing program may further cause the computer to execute an object location step (S31, S41, S60). The object location step locates an object as the operation target in the virtual space. In this case, the first rotation step includes a central coordinate set setting step (S53) of setting the indicated coordinate set calculated in the indicated coordinate set calculation step as a central coordinate set of rotation; and a step (S22) of rotating the object around the central coordinate set as the center of rotation.

According to a sixteenth aspect of the present invention, the information processing program may further cause the computer to execute an object location step (S31, S41, S60). The object location step locates an object as the operation target in the virtual space. In this case, the first rotation step includes a central coordinate set setting step (S53) of setting the three-dimensional coordinate set calculated in the three-dimensional indicated coordinate set setting step as a central coordinate set of rotation; and a step (S22) of rotating the object in the three-dimensional space around the central coordinate set as the center of rotation.

According to a seventeenth aspect of the present invention, the virtual space may be a virtual three-dimensional space. In this case, the information processing program further causes the computer to execute a virtual camera setting step (S50). The virtual camera setting step sets a virtual camera directed in a predetermined direction at a predetermined position in the virtual space. The first rotation step rotates the virtual camera as the operation target. The display step displays an image of the virtual space seen from the virtual camera on the display area.

According to an eighteenth aspect of the present invention, the virtual space may be a virtual three-dimensional space. In this case, the information processing program further causes the computer to execute a virtual camera setting step (S50). The virtual camera setting step sets a virtual camera directed in a predetermined direction at a predetermined position in the virtual space. The first rotation step rotates the virtual camera as the operation target around the three-dimensional coordinate set calculated in the three-dimensional indicated coordinate set setting step as the center of rotation.

According to a nineteenth aspect of the present invention, the first rotation step may rotate the virtual camera around a position of a point of attention of the virtual camera as the center of rotation.

According to a twentieth aspect of the present invention, the first rotation step may rotate the virtual camera such that a viewing direction of the virtual camera changes.

According to a twenty-first aspect of the present invention, the first rotation step may change a posture of the operation target by the rotation.

According to a twenty-second aspect of the present invention, the first rotation step may move a position of the operation target by rotating the operation target around a predetermined position as the center of rotation.

According to a twenty-third aspect of the present invention, the first rotation step may determine the posture or the position of the operation target in accordance with a calculated direction of the two-dimensional vector.

According to a twenty-fourth aspect of the present invention, the first rotation step may includes a determination step of determining whether or not a direction of the two-dimensional vector has exceeded a predetermined range; and a step of, when it is determined in the determination step that the direction of the two-dimensional vector has exceeded the predetermined range, rotating the operation target.

According to a twenty-fifth aspect of the present invention, the information processing program may further cause the computer to execute an inclination calculation step (S54). The inclination calculation step obtains a difference between a direction of the two-dimensional vector and a predetermined reference direction as an angle or a vector. In this case, the first rotation step rotates the operation target in accordance with the difference calculated in the inclination calculation step.

According to a twenty-sixth aspect of the present invention, the first rotation step may include a rotation amount setting step (S55) of setting a rotation amount in accordance with a magnitude of the difference calculated in the inclination calculation step; and a step (S56) of rotating the operation target by the rotation amount.

According to a twenty-seventh aspect of the present invention, the first rotation step may include a determination step of determining whether or not the difference calculated in the inclination calculation step has exceeded a predetermined value; and a step of, when it is determined in the determination step that the difference has exceeded the predetermined value, rotating the operation target.

According to a twenty-eighth aspect of the present invention, the information processing program may further cause the computer to execute a size calculation step (S19). The size calculation step calculates data representing a size of the image of the imaging target in the taken image obtained in the obtaining step from the operation data. In this case, the first rotation step rotates the operation target by a calculation using the two-dimensional vector and the data calculated in the size calculation step.

According to a twenty-ninth aspect of the present invention, the information processing program may further cause the computer to execute a length calculation step (S19). The length calculation step calculates data representing a length of a distance between the coordinate sets of the two predetermined points. In this case, the first rotation step rotates the operation target by a calculation using the two-dimensional vector and the data calculated in the length calculation step.

According to a thirtieth aspect of the present invention, the operation data may further include data representing a length of a distance between the coordinate sets of the two predetermined points in the image of the imaging target included in the taken image taken by the imaging means. In this case, the first rotation step rotates the operation target by a calculation using the two-dimensional vector and the data representing the length of the distance between the coordinate sets of the two predetermined points.

According to a thirty-first aspect of the present invention, the first rotation step may include a step (S48) of calculating distance data representing a distance between the imaging means and the imaging target from the data calculated in the size calculation step; and a step of rotating the operation target by a calculation using the two-dimensional vector and the distance data.

According to a thirty-second aspect of the present invention, first rotation step may include a step (S48) of calculating distance data representing a distance between the imaging means and the imaging target from the data calculated in the length calculation step; and a step of rotating the operation target by a calculation using the two-dimensional vector and the distance data.

According to a thirty-third aspect of the present invention, the first rotation step may include a step (S48) of calculating distance data representing a distance between the imaging means and the imaging target from the data representing the length of the distance between the coordinate sets of the two predetermined points; and a step of rotating the operation target by a calculation using the two-dimensional vector and the distance data.

According to a thirty-fourth aspect of the present invention, the operation data may further include distance data representing a distance between the imaging means and the imaging target. In this case, the first rotation step rotates the operation target by a calculation using the two-dimensional vector and the distance data.

According to a thirty-fifth aspect of the present invention, the information processing program may further cause the computer to execute a distance calculation step (S48). The distance calculation step calculates data corresponding to a distance between the imaging means and the imaging target. In this case, the first rotation step rotates the operation target by a calculation using the two-dimensional vector and the data calculated in the distance calculation step.

According to a thirty-sixth aspect of the present invention, the virtual space may be a virtual three-dimensional space. In this case, the information processing program further causes the computer to execute an object location step. The object location step locates at least one object in the virtual space. In this case, the first rotation step includes a depth setting step of determining a coordinate in a depth direction of the virtual space in correspondence with the distance data; a determination step of determining whether or not there is any one of the at least one object at a position of the coordinate in the depth direction calculated in the depth setting step; an operation target setting step of, when it is determined in the determination step that there is one of the at least one object, setting the one object as the operation target.

According to a thirty-seventh aspect of the present invention, the virtual space may be a virtual three-dimensional space. In this case, the first rotation step includes a depth setting step (S49) of determining a coordinate in a depth direction of the virtual space in correspondence with the distance data; a moving step of moving a position of the operation target in the depth direction to the coordinate in the depth direction calculated in the depth setting step; and a step of rotating the operation target in accordance with the two-dimensional vector.

According a thirty-eighth aspect of the present invention, the operation device may comprise inclination determining means (including acceleration sensor 37) for determining an inclination of the operation device. In this case, the information processing program further causes the computer to execute a determination step and a second rotation step. The determination step determines whether or not a two-dimensional vector can be calculated from the taken image in the vector calculation step. The second rotation step, when it is determined in the determination step that the two-dimensional vector cannot be calculated, rotates the operation target in accordance with the inclination determined by the inclination determining means.

According to the first aspect, a two-dimensional vector is calculated in the vector calculation step from the image of the imaging target (taken image). The value of the two-dimensional vector changes in accordance with the rotation state of the operation device including the imaging device. Accordingly, by displaying the operation target so as to rotate in accordance with the direction of the two-dimensional vector, the operation target can be rotated in accordance with the operation of rotating the operation device. Namely, according to the first aspect, a novel operation method by which the user can rotate the operation target by rotating the operation device itself held in his/her hand is provided. Also according to the first aspect, the taken image is obtained from the operation device, and therefore the operation device only needs to have a function of taking an image. Thus, the structure of the operation device can be simplified.

According to the second aspect, the positions of the two predetermined points in the image of the imaging target are calculated. Therefore, a two-dimensional vector can be easily calculated using the positions of the two points.

According to the third aspect, like in the first aspect, a novel operation method by which the user can rotate the operation target by rotating the operation device itself held in his/her handisprovided. Also according to the third aspect, the positions of the two predetermined points in the image of the imaging target are calculated by the operation device. Therefore, the information processing apparatus can easily calculate a two-dimensional vector using the positions of the two points. Thus, the processing load of the computer of the information processing apparatus can be alleviated.

According to the fourth aspect, like in the first aspect, a novel operation method by which the user can rotate the operation target by rotating the operation device itself held in his/her hand is provided. Also according to the fourth aspect, a two-dimensional vector is calculated by the operation device. Therefore, the information processing apparatus does not need to execute processing of calculating the two-dimensional vector. Thus, the processing load of the computer of the information processing apparatus can be alleviated.

According to the fifth aspect, a position on the display area is calculated in the indicated coordinate set calculation step from the position of the image of the imaging target in the taken image. Therefore, the user can designate a position on the display area with the operation device usable while being held in his/her hand. In addition, the operation target is rotated using the position designated by the user and the two-dimensional vector. Therefore, a more complicated rotation operation is made possible with the operation device usable while being held in the user's hand, and the user can control the rotation of the operation target more precisely. For example, the user can designate the central position of the rotation, or can rotate the operation target while moving the operation target to a designated position.

According to the sixth aspect, a position on the display area is calculated in the indicated coordinate set calculation step from the position of the image of the imaging target in the taken image. Therefore, the user can designate a position on the display area with the operation device usable while being held in his/her hand. In addition, the operation target is rotated using the position designated by the user and the two-dimensional vector. Therefore, a more complicated rotation operation is made possible with the operation device usable while being held in the user's hand, and the user can control the rotation of the operation target more precisely.

According to the seventh aspect, a position on the display area is calculated in the indicated coordinate set calculation step from the position of the image of the imaging target in the taken image. Therefore, the user can designate a position on the display area with the operation device usable while being held in his/her hand. In addition, the operation target is rotated using the position designated by the user and the two-dimensional vector. Therefore, a more complicated rotation operation is made possible with the operation device usable while being held in the user's hand, and the user can control the rotation of the operation target more precisely.

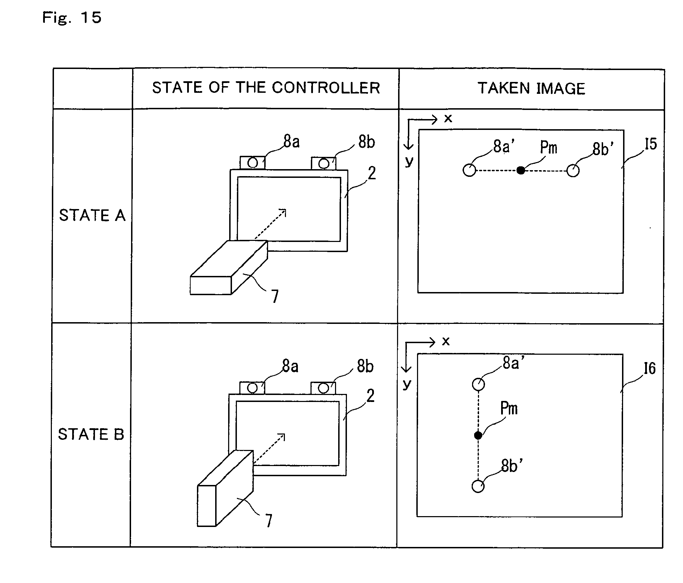

The position of the image of the imaging target in the taken image is different in accordance with the rotation state of the operation device (see FIG. 15). Namely, even if the operation device indicates one position, the position of the image of the imaging target may be different depending on the rotation stateoftheoperationdevice. In this case, the position indicated by the operation device (i.e., the position of the indicated coordinate set to be calculated in the indicated coordinate set calculation step) cannot be accurately calculated from the position of the image of the imaging target. By contrast, according to the eighth aspect, the position of the image of the imaging target obtained when the taken image is rotated so as to be directed in one certain direction, is calculated. Therefore, the influence of the rotation state of the operation device can be eliminated, and the position on the display screen or in the virtual space can be accurately calculated from the position of the image of the imaging target in the indicated coordinate set calculation step.

According to the ninth aspect, a position on the display area is calculated in the indicated coordinate set calculation step from the position of the image of the imaging target in the taken image. Therefore, the user can designate a position on the display area with the operation device usable while being held in his/her hand. In addition, the operation target is rotated using the position designated by the user and the two-dimensional vector. Therefore, a more complicated rotation operation is made possible with the operation device usable while being held in the user's hand, and the user can control the rotation of the operation target more precisely.

According to the tenth aspect, the user can move the operation target which is present in the virtual three-dimensional space by a novel operation of rotating the operation device itself. Also according to the tenth aspect, a more complicated rotation operation is made possible with the operation device usable while being held in the user's hand, and the user can control the rotation of the operation target which is present in the virtual three-dimensional space more precisely.

According to the eleventh aspect, the user can move the object which is present in the virtual three-dimensional space by a novel operation of rotating the operation device itself.

According to the twelfth aspect, the object displayed at the position on the display area corresponding to the indicated coordinate set calculated in the indicated coordinate set calculation step is set as the operation target. Therefore, the user can perform an operation of designating the object displayed on the display screen using the operation device. In addition, the user can rotate the designated obj ect using the operation device. Thus, the user can issue two types of instructions, i.e., an instruction regarding the selection of the object as the operation target and an instruction to rotate the selected object, with one type of operation, i.e., an operation on a posture of one operation device while holding the operation device in his/her hand.

According to the thirteenth aspect, the object is moved to the position on the display area corresponding to the indicated coordinate set calculated in the indicated coordinate set calculation step. Therefore, the user can perform an operation of moving the object displayed on the display screen using the operation device. In addition, the user can rotate the designated object using the operation device. Thus, the user can issue two types of instructions, i.e., an instruction to move the object as the operation target and an instruction to rotate the object, with one type of operation, i.e., an operation on a posture of one operation device while holding the operation device in his/her hand.

According to the fourteenth aspect, the object is moved to the position of the three-dimensional coordinate set corresponding to the indicated coordinate set calculated in the three-dimensional indicated coordinate set calculation step. Therefore, the user can perform an operation of moving the object in the virtual three-dimensional space using the operation device. In addition, the user can rotate the designated object using the operation device. Thus, the user can issue two types of instructions, i.e., an instruction to move the object as the operation target and an instruction to rotate the object, with one type of operation, i.e., an operation on a posture of one operation device while holding the operation device in his/her hand.

According to the fifteenth aspect, the user can designate a position on the display screen using the operation device usable while being held in his/her hand. The user can designate the central position of the rotation of the object using the operation device. Since the number of types of rotation is increased, the user can cause the object to perform a wider variety of rotation motions.

According to the sixteenth aspect, the user can designate a position in the virtual three-dimensional space using the operation device usable while being held in his/her hand. The user can designate the central position of the rotation of the object using the operation device. Since the number of types of rotation is increased, the user can cause the object to perform a wider variety of rotation motions.

According to the seventeenth aspect, by rotating the virtual camera in the first rotation step, the position of the viewing point or the viewing direction with respect to the image in the virtual space displayed on the display screen can be changed. The user can change the position of the viewing point or the viewing direction with respect to the image in the virtual space displayed on the display screen using a novel operation of rotating the operation device itself.

According to the eighteenth aspect, the user can designate a position on the display screen using the operation device usable while being held in his/her hand. The user can designate the central position of the rotation of the virtual camera using the operation device. Since the number of types of rotation is increased, the user can cause the virtual camera to perform a wider variety of rotation motions.

According to the nineteenth aspect, the viewing direction with respect to the obj ect which is present at the position of the point of attention can be freely changed by a novel operation of rotating the operation device itself.

According to the twentieth aspect, the viewing direction of the virtual camera can be freely changed by a novel operation of rotating the operation device itself.

According to the twenty-first aspect, the posture of the operation target can be freely changed by a novel operation of rotating the operation device itself.

According to the twenty-second aspect, the operation target can be freely rotated or moved on an arc by a novel operation of rotating the operation device itself.

According to the twenty-third aspect, the operation target can be rotated so as to correspond to the rotation angle of the operation device.

According to the twenty-fourth aspect, when the calculated direction of the two-dimensional vector is within the predetermined range, the operation target is not rotated. If the operation target is rotated as a result of responding too sensitively to the rotation angle of the operation device, the user is required to operate the operation device precisely, which deteriorates the operability of the operation device. By contrast, according to the twenty-fourth aspect, the operation target is not rotated while being in the predetermined range of angles. A so-called "play" margin can be set in the rotation operation on the operation device. Thus, the operability can be improved.

According to the twenty-fifth aspect, the operation target is rotated based on the difference between the direction of the two-dimensional vector and the predetermined reference direction. By setting the direction with which the user feel comfortable as the reference direction, the operability of the operation device can be improved.

According to the twenty-sixth aspect, the rotation amount of the operation target is increased in accordance with the difference between the direction of the two-dimensional vector and the predetermined reference direction. Therefore, the user can control the rotation amount of the operation target by the rotation amount of the operation device. Thus, the user can intuitively and easily control the rotation amount of the operation target.

According to the twenty-seventh aspect, the operation target is not rotated unless the difference between the direction of the two-dimensional vector and the predetermined reference direction exceeds the predetermined range. By setting the range in which the angular difference does not exceed the predetermined range as the so-called "play" range, the operability of the operation device can be improved like in the twenty-fourth aspect.

According to the twenty-eighth aspect, the distance from the imaging means (operation device) to the imaging target can be detected by data representing the size of the image of the imaging target. Therefore, the user can perform an operation of rotating the operation target by moving the operation device itself so as to change the distance. Thus, a more complicated rotation operation is made possible with the operation device usable while being held in the user's hand, and the user can control the rotation of the operation target more precisely.

According to the twenty-ninth aspect, the distance from the imaging means (operation device) to the imaging target can be detected by data representing the length of the distance between the coordinate sets of two points corresponding to the two positions in the imaging target. Therefore, the user can perform an operation of rotating the operation target by moving the operation device itself so as to change the distance. Thus, a more complicated rotation operation is made possible with the operation device usable while being held in the user's hand, and the user can control the rotation of the operation target more precisely.

According to the thirtieth aspect, like in the twenty-eighth and twenty-ninth aspects, a more complicated rotation operation is made possible with the operation device usable while being held in the user's hand, and the user can control the rotation of the operation target more precisely.

According to the thirty-first aspect, the distance from the imaging means to the imaging target can be more accurately reflected on the rotation operation on the operation target.

According to the thirty-second aspect, the distance from the imaging means to the imaging target can be more accurately reflected on the rotation operation on the operation target.

According to the thirty-third aspect, the distance from the imaging means to the imaging target can be more accurately reflected on the rotation operation on the operation target.

According to the thirty-fourth aspect, the distance from the imaging means to the imaging target can be more accurately reflected on the rotation operation on the operation target.

According to the thirty-fifth aspect, data corresponding to the distance from the imaging means (operation device) to the imaging target (length data 59 or distance data 63) is calculated. Therefore, the user can perform an operation of rotating the operation target by moving the operation device itself so as to change the distance. Thus, a more complicated rotation operation is made possible with the operation device usable while being held in the user's hand, and the user can control the rotation of the operation target more precisely.

According to the thirty-sixth aspect, the object which is present at the position corresponding to the coordinate in the depth direction determined in the depth setting step is set as the operation target. Therefore, the user can perform an operation of designating the object in the virtual space using the operation device. In addition, the user can rotate the designated object using the operation device. Thus, the user can issue two types of instructions, i.e., an instruction regarding the selection of the object as the operation target and an instruction to rotate the selected obj ect, with one type of operation, i.e., an operation of moving the operation device itself while holding the operation device in his/her hand.

According to the thirty-seventh aspect, the operation target is moved to the position corresponding to the coordinate in the depth direction determined in the depth setting step. Therefore, the user can perform an operation of moving the operation target in the virtual space using the operation device. In addition, the user can rotate the operation target using the operation device. Thus, the user can issue two types of instructions, i.e., an instruction to move the operation target and an instruction to rotate the operation target, with one type of operation, i.e., an operation of moving the operation device itself while holding the operation device in his/her hand.

According to the thirty-eighth aspect, when the operation device is held by the user in the state of exceeding a range in which the imaging means can take an image of the imaging target (operable range described later), the operation target is rotated in accordance with the inclination determined by the inclination determining means. Therefore, even if the operable range is exceeded while the user is performing an operation of moving the operation device, the rotation of the operation target can be continued.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is an external view of a game system 1 as an exemplary information processing system according to one embodiment of the present invention;
FIG. 2 is a functional block diagram of a game apparatus 3;
FIG. 3A is an isometric view of a controller 7 seen from the top rear side thereof;
FIG. 3B is an isometric view of the controller 7 seen from the bottom rear side thereof;
FIG. 4 is a front view of the controller 7;
FIG. 5A is an isometric view illustrating a state where an upper casing of the controller 7 is removed;
FIG. 5B is an isometric view illustrating a state where a lower casing of the controller 7 is removed;
FIG. 6 is a block diagram illustrating a structure of the controller 7;
FIG. 7 shows a general view of a game operation using the controller 7;
FIG. 8 illustrates the viewing angles of markers 8a and 8b and the controller 7;
FIG. 9 shows an example of a taken image including a target image;
FIG. 10 shows a change of the taken image when the position and/or the direction of the controller 7 is changed;
FIG. 11 shows main data stored on a main memory 13 of the game apparatus 3;
FIG. 12 is a flowchart illustrating a flow of game processing executed by the game apparatus 3;
FIG. 13 is a flowchart illustrating a detailed flow of operation state calculation processing (S2) shown in FIG. 12;
FIG. 14 illustrates processing for determining a first coordinate set and a second coordinate set;
FIG. 15 shows the correspondence between the state of the controller 7 and the taken image when the controller 7 is in the respective state;
FIG. 16 is a flowchart illustrating a detailed flow of moving processing (S3) shown in FIG. 12;
FIG. 17A, FIG. 17B and FIG. 17C show examples of a rotation motion of an operation target;
FIG. 18A and FIG. 18B show examples of a rotation motion of an operation target;
FIG. 19 shows an example of a game screen in a first example;
FIG. 20 illustrates an operation of a player object 71 by a rotation operation;
FIG. 21 is a flowchart illustrating a flow of game processing in the first example;
FIG. 22 shows an example of a game screen in a second example;
FIG. 23 is a flowchart illustrating a flow of game processing in the second example;
FIG. 24 is a flowchart illustrating a detailed flow of the moving processing in the second example;
FIG. 25 is a flowchart illustrating a detailed flow of the processing in step S48 shown in FIG. 24;
FIG. 26A and FIG. 26B show the processing in step S48 shown in FIG. 24;
FIG. 27 shows an example of a game screen in a third example;
FIG. 28 shows main data stored on the main memory 13 in the third example;
FIG. 29 is a flowchart illustrating a flow of game processing in the third example;
FIG. 30 is a flowchart illustrating a detailed flow of the moving processing in the third example;
FIG. 31 shows an example of a game screen in a fourth example; and
FIG. 32 is a flowchart illustrating a flow of game processing in the fourth example.

DESCRIPTION OF THE PREFERRED EMBODIMENTS

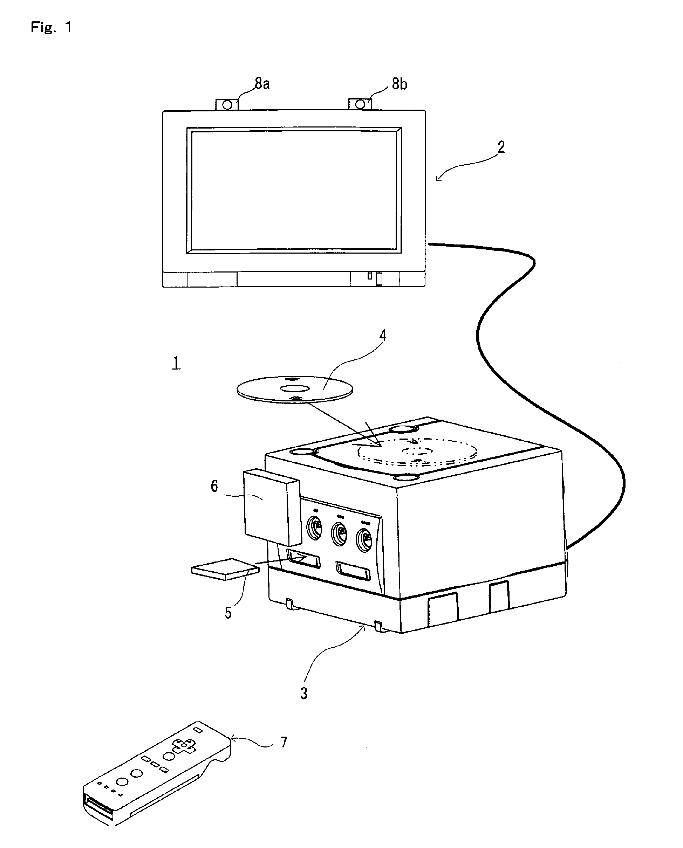

With reference to FIG. 1, a game system 1 as an example of an information processing system according to one embodiment of the present invention will be described. FIG. 1 is an external view illustrating the game system 1. In the following exemplary description, the game system 1 according to the present invention is of an installation type.

As shown in FIG. 1, the game system 1 includes an installation type game apparatus (hereinafter, referred to simply as a "game apparatus") 3, which is connected to a display (hereinafter, referred to as a "monitor") 2 such as a home-use TV receiver including a speaker 22 via a connection cord, and a controller 7 for giving operation data to the game apparatus 3. Two markers 8a and 8b are provided in the vicinity of the monitor 2 (above the screen of the monitor 2 in FIG. 1). The markers 8a and 8b are specifically infrared LEDs, and each outputs infrared light forward from the monitor 2. The game apparatus 3 is connected to a receiving unit 6 via a connection terminal. The receiving unit 6 receives operation data which is wirelessly transmitted from the controller 7. The controller 7 and the game apparatus 3 are connected to each other by wireless communication. On the game apparatus 3, an optical disc 4 as an example of an exchangeable information storage medium is detachably mounted. The game apparatus 3 has, on a top main surface thereof, a power ON/OFF switch, a game processing reset switch, and an OPEN switch for opening a top lid of the game apparatus 3. When a player presses the OPEN switch, the lid is opened, so that the optical disc 4 is mounted or dismounted.

On the game apparatus 3, an external memory card 5 is detachably mounted when necessary. The external memory card 5 has a backup memory or the like mounted thereon for fixedly storing saved data or the like. The game apparatus 3 executes a game program or the like stored on the optical disc 4 and displays the result on the monitor 2 as a game image. The game apparatus 3 can also reproduce a state of a game played in the past using saved data stored on the memory card 5 and display the game image on the monitor 2. The player playing with the game apparatus 3 can enjoy the game by operating the controller 7 while watching the game image displayed on the display screen of the monitor 2.

The controller 7 wirelessly transmits operation data from a communication section 36 included therein (described later) to the game apparatus 3 connected to the receiving unit 6, using the technology of, for example, Bluetooth (registered trademark). The controller 7 is operation means for operating an operation target (an object displayed on the display screen of the monitor 2 or a virtual camera). The controller 7 includes an operation section having a plurality of operation buttons. As described later in detail, the controller 7 also includes an imaging information calculation section 35 for detecting the position and the posture of the controller 7. The imaging information calculation section 35 takes an image of each of the markers 8a and 8b located in the vicinity of the monitor 2. The game apparatus 3 uses these images to obtain an operation signal corresponding to the position and the posture of the controller 7.

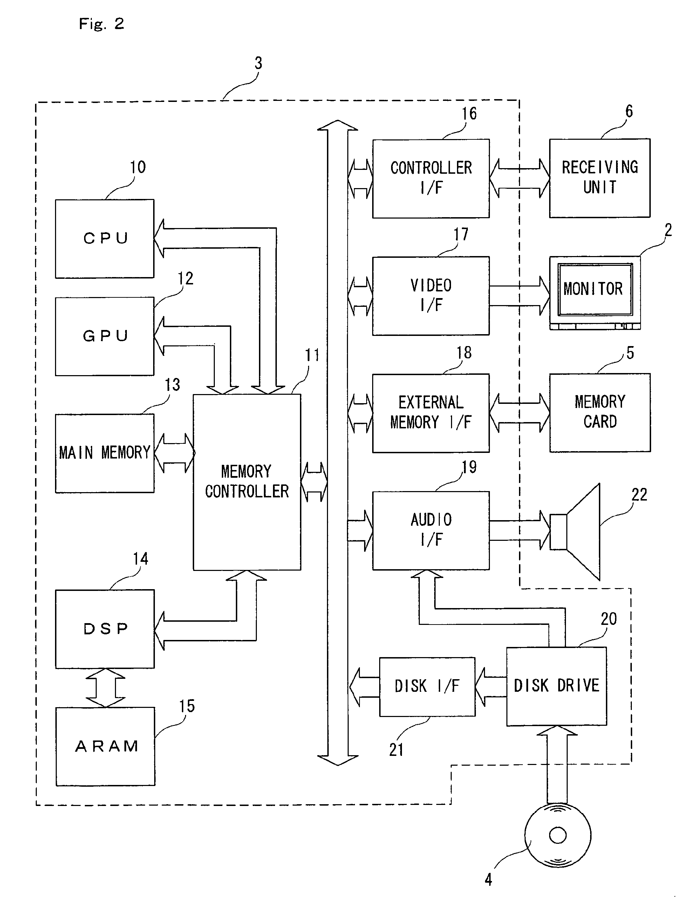

With reference to FIG. 2, a structure of the game apparatus 3 will be described. FIG. 2 is a functional block diagram of the game apparatus 3.

As shown in FIG. 2, the game apparatus 3 includes, for example, a RISC CPU (central processing unit) 10 for executing various types of programs. The CPU 10 executes a start program storedinabootROM (not shown) to, for example, initializememories including a main memory 13, and then executes a game program stored on the optical disc 4 to perform game processing or the like in accordance with the game program. The CPU 10 is connected to a GPU (Graphics Processing Unit) 12, the main memory 13, a DSP (Digital Signal Processor) 14, and an ARAM (Audio RAM) 15 via a memory controller 11. The memory controller 11 is connected to a controller I/F (interface) 16, a video I/F 17, an external memory I/F 18, an audio I/F 19, and a disc I/F 21 via a predetermined bus. The controller I/F 16, the video I/F 17, the external memory I/F 18, the audio I/F 19 and the disc I/F 21 are respectively connected to the receiving unit 6, the monitor 2, the external memory card 5, the speaker 22 and a disc drive 20.

The GPU 12 performs image processing based on an instruction from the CPU 10. The GPU 12 includes, for example, a semiconductor chip for performing calculation processing necessary for displaying 3D graphics. The GPU 12 performs the image processing using a memory dedicated for image processing (not shown) and a part of the storage area of the main memory 13. The GPU 12 generates game image data and a movie to be displayed on the display screen of the monitor 2 using such memories, and outputs the generated data or movie to the monitor 2 via the memory controller 11 and the video I/F 17 as necessary.

The main memory 13 is a storage area used by the CPU 10, and stores a game program or the like necessary for processing performed by the CPU 10 as necessary. For example, the main memory 13 stores a game program read from the optical disc 4 by the CPU 10, various types of data or the like. The game program, the various types of data or the like stored in the main memory 13 are executed by the CPU 10.

The DSP 14 processes sound data or the like generated by the CPU 10 during the execution of the game program. The DSP 14 is connected to the ARAM 15 for storing the sound data or the like. The ARAM 15 is used when the DSP 14 performs predetermined processing (for example, storage of the game program or sound data already read). The DSP 14 reads the sound data stored in the ARAM 15 and outputs the sound data to the speaker 22 included in the monitor 2 via the memory controller 11 and the audio I/F 19.

The memory controller 11 comprehensively controls data transfer, and is connected to the various I/Fs described above. The controller I/F 16 includes, for example, four controller I/Fs, and communicably connects the game apparatus 3 to an external device which is engageable via connectors of the controller I/Fs. For example, the receiving unit 6 is engaged with such a connector and is connected to the game apparatus 3 via the controller I/F 16. As described above, the receiving unit 6 receives the operation data from the controller 7 and outputs the operation data to the CPU 10 via the controller I/F 16. In other embodiments, the game apparatus 3 may include a receiving module for receiving the operation data transmitted from the controller 7, instead of the receiving unit 6. In this case, the operation data received by the receiving module is output to the CPU 10 via a predetermined bus. The video I/F 17 is connected to the monitor 2. The external memory I/F 18 is connected to the external memory card 5 and is accessible to a backup memory or the like provided in the external card 5. The audio I/F 19 is connected to the speaker 22 built in the monitor 2, and is connected such that the sound data read by the DSP 14 from the ARAM 15 or sound data directly output from the disc drive 20 is output from the speaker 22. The disc I/F 21 is connected to the disc drive 20. The disc drive 20 reads data stored at a predetermined reading position of the optical disc 4 and outputs the data to a bus of the game apparatus 3 or the audio I/F 19.

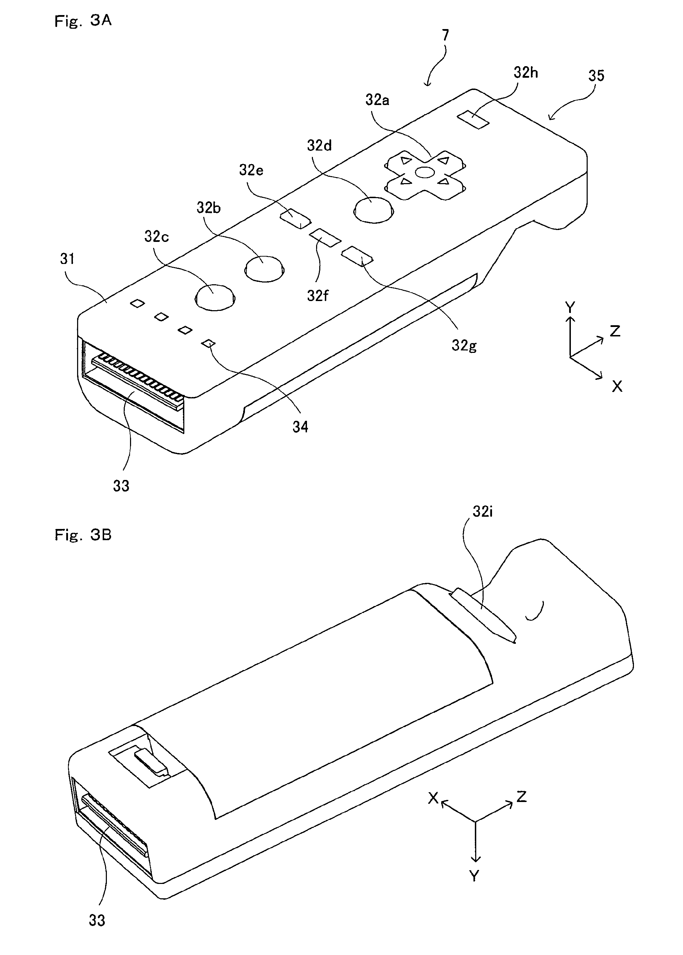

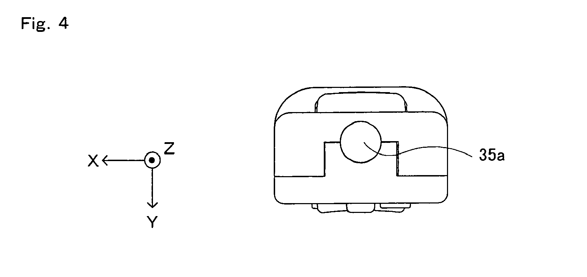

With reference to FIG. 3A through FIG. 7, the controller 7 will be described. FIG. 3A through FIG. 5B are external isometric views of the controller 7. FIG. 3A is an isometric view of the controller 7 seen from the top rear side thereof. FIG. 3B is an isometric view of the controller 7 seen from the bottom rear side thereof. FIG. 4 is a front view of the controller 7.

As shown in FIG. 3A, FIG. 3B and FIG. 4, the controller 7 includes a housing 31 formed by plastic molding or the like. The housing 31 has a generally parallelepiped shape extending in a longitudinal or front-rear direction (the Z-axis direction shown in FIG. 3A). The overall size of the housing 31 is small enough to be held by one hand of an adult or even a child. The player can use the controller 7 to perform a game operation of pressing buttons provided thereon and also to perform a game operation of changing the position or direction of the controller 7 itself. For example, the player can rotate the controller 7 with the longitudinal direction thereof as an axis to move an operation target. The player can change the position indicated by the controller 7 on the display screen to, for example, move the operation target toward the post-change position. The "position indicated by the controller 7 on the display screen" refers to a position at which a phantom straight line extending from a front end of the controller 7 in the longitudinal direction crosses the display screen of the monitor 2. Hereinafter, such a position will be sometimes referred to as an "indicated position" or an "indicated position by the controller 7". The longitudinal direction of the controller 7 (housing 31) will be sometimes referred to as an "indicated direction".

The housing 31 has a plurality of operation buttons. Provided on a top surface of the housing 31 are a cross key 32a, an X button 32b, a Y button 32c, a B button 32d, a select switch 32e, a menu switch 32f, and a start switch 32g. On a bottom surface of the housing 31, a recessed portion is formed. On a rear slope surface of the recessed portion, an A button 32i is provided. These buttons and switches are assigned various functions in accordance with the game program executed by the game apparatus 3, but this will not be described in detail because the functions are not directly relevant to the present invention. On the top surface of the housing 31, a power switch 32h is provided for remotely turning on or off the game apparatus 3.

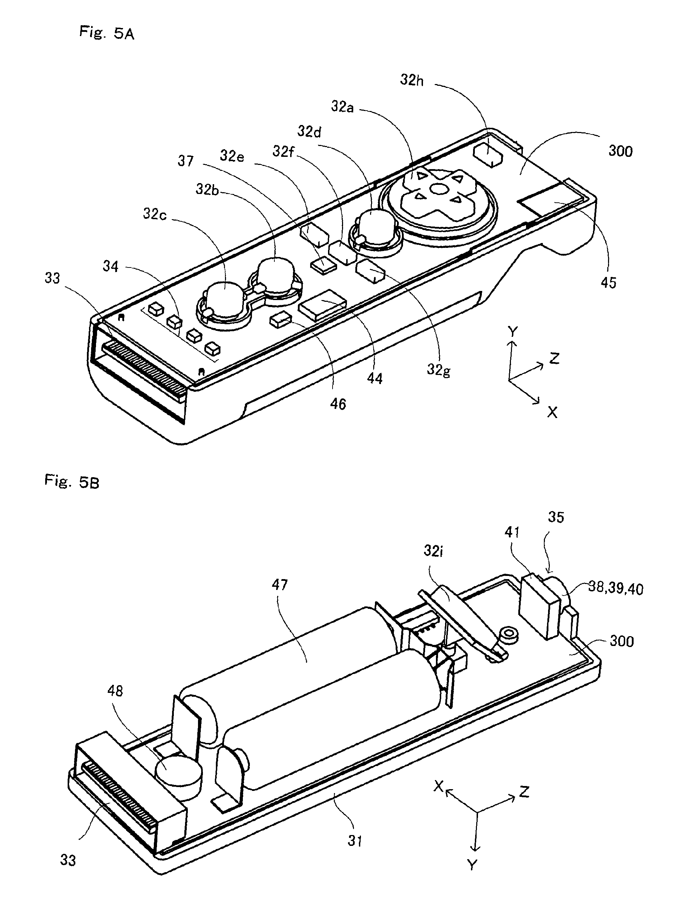

The controller 7 has the imaging information calculation section 35 (FIG. 5B). As shown in FIG. 4, a light incident opening 35a of the imaging information calculation section 35 is provided on a front surface of the housing 31. On a rear surface of the housing 31, a connector 33 is provided. The connector 33 is, for example, a 32-pin edge connector, and is used for connecting the controller 7 to another device. In a rear part of the top surface of the housing 31, a plurality of LEDs 34 are provided. The controller 7 is assigned a controller type (number) so as to be distinguishable from the other controllers 7. The LEDs 34 are used for informing the player of the controller type which is currently set to controller 7 that he/she is using. Specifically, when the controller 7 transmits the operation data to the game apparatus 3, one of the plurality of LEDs 34 corresponding to the controller type is lit up.

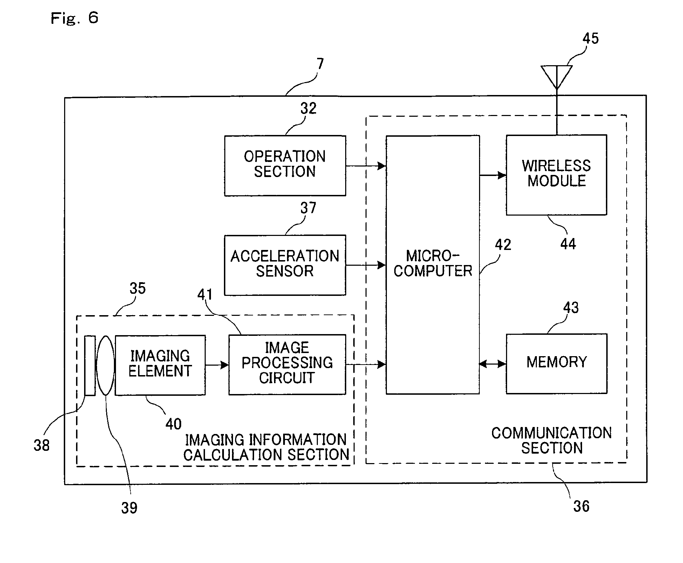

With reference to FIG. 5A, FIG. 5B and FIG. 6, an internal structure of the controller 7 will be described. FIG. 5A and FIG. 5B illustrate an internal structure of the controller 7. FIG. 5A is an isometric view illustrating a state where an upper casing (a part of the housing 31) of the controller 7 is removed. FIG. 5B is an isometric view illustrating a state where a lower casing (a part of the housing 31) of the controller 7 is removed. FIG. 5B shows a reverse side of a substrate 300 shown in FIG. 5A.

As shown in FIG. 5A, the substrate 300 is fixed inside the housing 31. On a top main surface of the substrate 300, the operation buttons 32a through 32h, an acceleration sensor 37, the LEDs 34, a quartz oscillator 46, a wireless module 44, an antenna 45 and the like are provided. These elements are connected to a microcomputer 42 (see FIG. 6) via lines (not shown) formed on the substrate 300 and the like. The wireless module 44 and the antenna 45 allow the controller 7 to act as a wireless controller. The quartz oscillator 46 generates a reference clock of the microcomputer 42 described later.

As shown in FIG. 5B, at a front edge of a bottom main surface of the substrate 300, the imaging information calculation section 35 is provided. The imaging information calculation section 35 includes an infrared filter 38, a lens 39, an imaging element 40 and an image processing circuit 41 located in this order from the front surface of the controller 7. These elements are attached to the bottom main surface of the substrate 300. At a rear edge of the bottom main surface of the substrate 300, the connector 33 is attached. The operation button 32i is attached on the bottom main surface of the substrate 300 rearward to the imaging information calculation section 35, and cells 47 are accommodated rearward to the operation button 32i. On the bottom main surface of the substrate 300 between the cells 47 and the connector 33, a vibrator 48 is attached. The vibrator 48 may be, for example, a vibration motor or a solenoid. The controller 7 is vibrated by an actuation of the vibrator 48, and the vibration is conveyed to the player holding the controller 7. Thus, a so-called vibration-responsive game is realized.

FIG. 6 is a block diagram showing the structure of the controller 7. The controller 7 includes the communication section 36 and the acceleration sensor 37 in addition to the above-described operation section 32 (operation buttons) and the imaging information calculation section 35.

The imaging information calculation section 35 is a system for analyzing image data taken by imaging means and detecting the position of the center of gravity, the size and the like of an area having a high brightness in the image data. The imaging information calculation section 35 has, for example, a maximum sampling period of about 200 frames/sec. , and therefore can trace and analyze even a relatively fast motion of the controller 7.

Specifically, the imaging information calculation section 35 includes the infrared filter 38, the lens 39, the imaging element 40 and the image processing circuit 41. The infrared filter 38 allows only infrared light to pass therethrough, among light incident on the front surface of the controller 7. The markers 8a and 8b located in the vicinity of the display screen of the monitor 2 are infrared LEDs for outputting infrared light forward from the monitor 2. Therefore, the provision of the infrared filter 38 allows the image of each of the markers 8a and 8b to be taken more accurately. The lens 39 collects the infrared light which has passed through the infrared filter 38 and outputs the infrared light to the imaging element 40. The imaging element 40 is a solid-state imaging device such as, for example, a CMOS sensor or a CCD. The imaging element 40 takes an image of the infrared light collected by the lens 39. Accordingly, the imaging element 40 takes an image of only the infrared light which has passed through the infrared filter 38 and generates image data. Hereinafter, an image taken by the imaging element 40 will be referred to as a "taken image". The image data generated by the imaging element 40 is processed by the image processing circuit 41. The image processing circuit 41 calculates the positions of the imaging targets (the markers 8a and 8b) in the taken image, and outputs coordinate sets indicating the respective positions of the markers 8a and 8b in the taken image to the communication section 36. The processing executed by the image processing circuit 41 will be described later in detail.

The acceleration sensor 37 detects an acceleration in three axial directions of the controller 7, i.e., the up-down direction (Y-axis direction in FIG. 3A), the left-right direction (X-axis direction in FIG. 3A), and the front-rear direction (the Z-axis direction in FIG. 3A). The acceleration sensor 37 allows the inclinations of the controller 7 in the X-axis, Y-axis and Z-axis directions to be determined. The game apparatus 3 can also determine the rotation angle of the controller 7 around the Z axis by the acceleration sensor 37, in addition to based on the taken image mentioned above. Data representing the accelerations detected by the acceleration sensor 37 is output to the communication section 36.

As explained above, the controller 7 preferably includes a three-axis, linear acceleration sensor 37 that detects linear acceleration in each of the three axial directions described above. Alternatively, a two axis linear accelerometer that only detects linear acceleration along each of the X-axis and Y-axis (or other pair of axes) may be used in another embodiment depending on the type of control signals desired. As a non-limiting example, the three-axis or two-axis linear accelerometer 37 may be of the type available from Analog Devices, Inc. or STMicroelectronics N.V. Preferably, the acceleration sensor 37 is an electrostatic capacitance or capacitance-coupling type that is based on silicon micro-machined MEMS (microelectromechanical systems) technology. However, any other suitable accelerometer technology (e.g., piezoelectric type or piezoresistance type) now existing or later developed may be used to provide the three-axis or two- axis acceleration sensor 37.

As one skilled in the art understands, linear accelerometers, as used in acceleration sensor 37, are only capable of detecting acceleration along a straight line corresponding to each axis of the acceleration sensor. In other words, the direct output of the acceleration sensor 37 is limited to signals indicative of linear acceleration (static or dynamic) along each of the two or three axes thereof. As a result, the acceleration sensor 37 cannot directly detect movement along a non-linear (e.g. arcuate) path, rotation, rotational movement, angular displacement, tilt, position, attitude or any other physical characteristic.

However, through additional processing of the linear acceleration signals output from the acceleration sensor 37, additional information relating to the controller 7 can be inferred or calculated, as one skilled in the art will readily understand from the description herein. For example, by detecting static, linear acceleration (i.e., gravity), the linear acceleration output of the acceleration sensor 37 can be used to infer or calculate tilt or inclination of the object relative to the gravity vector by correlating tilt angles with detected linear acceleration. In this way, the acceleration sensor 37 can be used in combination with the micro-computer 42 (or another processor) to determine tilt, attitude or position of the controller 7. Similarly, various movements and/or positions of the controller 7 can be calculated or inferred through processing of the linear acceleration signals generated by the acceleration sensor 37 when the controller 7 containing the acceleration sensor 37 is subjected to dynamic accelerations by, for example, the hand of a user. In another embodiment, the acceleration sensor 37 may include an embedded signal processor or other type of dedicated processor for performing any desired processing of the acceleration signals output from the accelerometers therein prior to outputting signals to micro-computer 42. For example, the embedded or dedicated processor could convert the detected acceleration signal to a corresponding tilt angle when the acceleration sensor is intended to detect static acceleration (i.e., gravity).

In another exemplary embodiment, the acceleration sensor 37 may be replaced with a gyro-sensor of any suitable technology incorporating, for example, a rotating or vibrating element. Exemplary MEMS gyro-sensors that may be used in this embodiment are available from Analog Devices, Inc. Unlike the linear acceleration sensor 37, a gyro-sensor is capable of directly detecting rotation (or angular rate) around an axis defined by the gyroscopic element (or elements) therein. Thus, due to the fundamental differences between a gyro-sensor and a linear acceleration sensor (e.g., angle-based vs. vector-based output), corresponding changes need to be made to the processing operations that are performed on the output signals from these devices depending on which device is selected for a particular application. More specifically, when tilt or inclination is calculated using a gyro-sensor instead of the acceleration sensor, significant changes are necessary. Specifically, when using a gyro-sensor, the value of inclination is initialized at the start of detection. Then, data on the angular velocity which is output from the gyroscope is integrated. Furthermore, a change amount in inclination from the value of inclination previously initialized is calculated. In this case, the calculated inclination corresponds to an angle. In contrast, when an acceleration sensor is used, the inclination is calculated by comparing the value of the acceleration of gravity of each axial component with a predetermined reference. Therefore, the calculated inclination can be represented as a vector. Thus, without initialization, an absolute direction can be determined with an accelerometer. The type of the value calculated as an inclination is also very different between a gyroscope and an accelerometer; i.e., the value is an angle when a gyroscope is used and is a vector when an acceleration sensor is used. Therefore, when a gyroscope is used instead of an acceleration sensor or vice versa, data on inclination also needs to be processed by a predetermined conversion that takes into account the fundamental differences between these two devices. Due to the fact that the nature of gyroscopes is known to one skilled in the art, as well as the fundamental differences between linear accelerometers and gyroscopes, further details are not provided herein so as not to obscure the remainder of the disclosure. While gyro-sensors provide certain advantages due to their ability to directly detect rotation, linear acceleration sensors are generally more cost effective when used in connection with the controller applications described herein.

The communication section 36 includes the microcomputer 42, a memory 43, the wireless module 44 and the antenna 45. The microcomputer 42 controls the wireless module 44 for wirelessly transmitting the data obtained by the microcomputer 42 while using the memory 43 as a storage area during processing.

Data which is output from the operation section 32, the acceleration sensor 37 and the imaging information calculation section 35 to the microcomputer 42 is temporarily stored in the memory 43. The wireless transmission from the communication section 36 to the receiving unit 6 is performed at a predetermined time interval. Since game processing is generally performed at a cycle of 1/60 sec. , the wireless transmission needs to be performed at a cycle of a shorter time period. At the transmission timing to the receiving unit 6, the microcomputer 42 outputs the data stored in the memory 43 to the wireless module 44 as operation data. The wireless module 44 uses, for example, the Bluetooth (registered trademark) technology to modulate a carrier wave of a predetermined frequency with the operation data and radiate the resultant very weak electric signal from the antenna 45. Namely, the operation data is modulated into a very weak electric signal by the wireless module 44 and transmitted from the controller 7. The very weak electric signal is received by the receiving unit 6 on the side of the game apparatus 3. The received very weak electric signal is demodulated or decoded, so that the game apparatus 3 can obtain the operation data. The CPU 10 of the game apparatus 3 executes the game processing based on the obtained operation data and the game program.

The shape of the controller 7, and the shape, number, position or the like of the operation buttons and switches shown in FIG. 3A through FIG. 5B are merely exemplary, and may be altered without departing from the scope of the present invention. The position of the imaging information calculation section 35 in the controller 7 (the light incident opening 35a of the imaging information calculation section 35) does not need to be on the front surface of the housing 31, and may be on another surface as long as light can enter from the outside of the housing 31. In this case, the "indicated direction" is a direction vertical to the light incident opening.

By using the controller 7, the player can perform a game operation, which was not possible conventionally, of changing the position of the controller 7 itself or rotating the controller 7, in addition to the pressing of the operation buttons or switches. Hereinafter, the game operations using the controller 7 will be described.

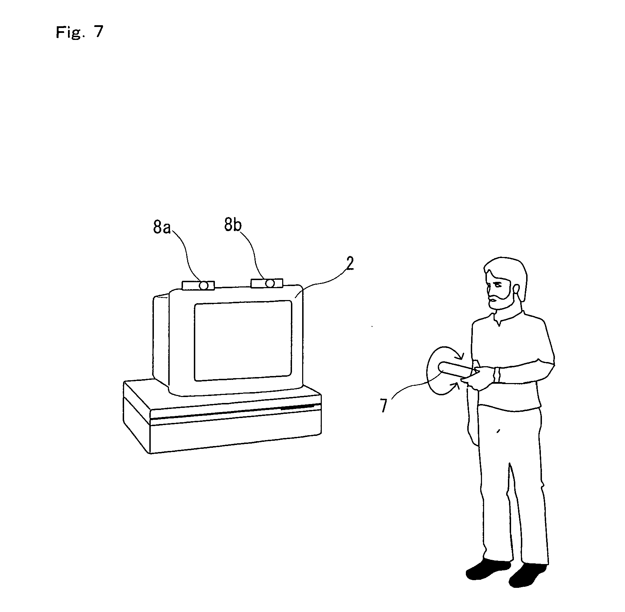

FIG. 7 is a general view of a game operation using the controller 7. As shown in FIG. 7, when playing the game using the controller 7 with the game system 1, the player holds the controller 7 with one hand (for example, left hand). The markers 8a and 8b are located parallel to the transverse or width direction of the monitor 2. The player holds the controller 7 such that the front surface of the controller 7 (having the light incident opening 35a by which the imaging information calculation section 35 takes the image of each of the markers 8a and 8b) faces the markers 8a and 8b. In this state, the player rotates the controller 7 (as indicated by the arrows in FIG. 7) or changes the position indicated by the controller 7 on the display screen to perform the game operations.

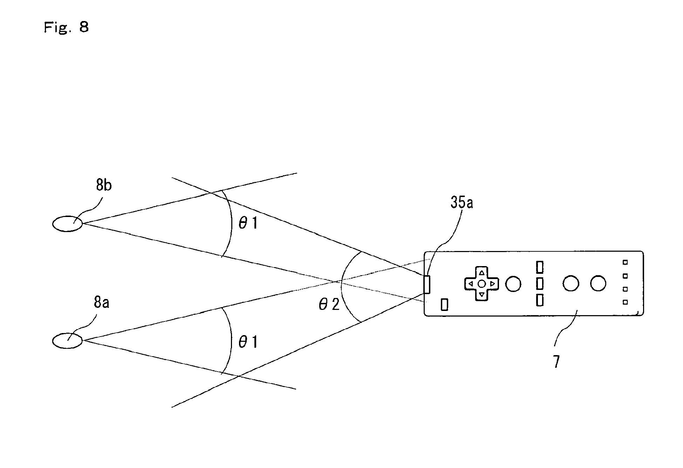

FIG. 8 illustrates the viewing angles of the markers 8a and 8b and the controller 7. As shown in FIG. 8, the markers 8a and 8b each radiate infrared light at a viewing angle $\theta 1$. The imaging information calculation section 35 can receive light incident thereon at a viewing angle $\theta 2$. For example, the viewing angle $\theta 1$ of each of the markers 8a and 8b is 34° (half value angle), and the viewing angle $\theta 2$ of the imaging information calculation section 35 is 41°. The player holds the controller 7 at the position and the direction with which the imaging information calculation section 35 can receive the infrared light from both the markers 8a and 8b. Specifically, the player holds the controller 7 in a range in which both the markers 8a and 8b exist in the viewing angle θ2 of the imaging information calculation section 35 and the controller 7 exists in the viewing angle θ1 of the marker 8a and also in the viewing angle θ1 of the marker 8b. The player can perform a game operation by changing the position or the direction of the controller 7 in this range. When the position or the direction of the controller 7 is outside the above-described range, the game operation based on the position and the direction of the controller 7 cannot be performed. Hereinafter, the above-described range will be referred to as an "operable range".

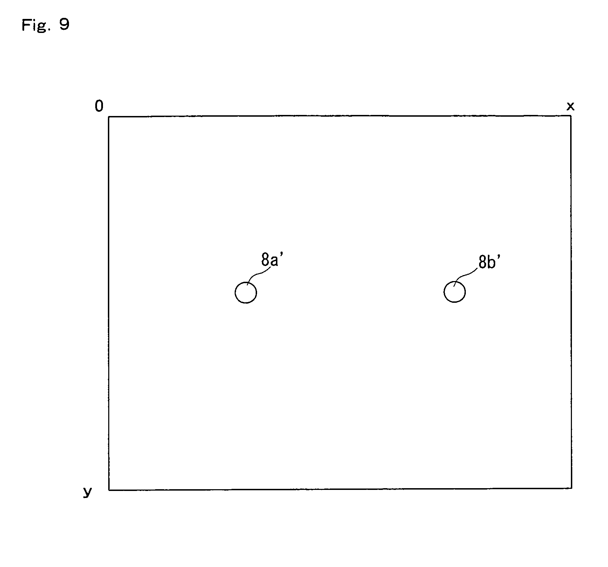

Where the controller 7 is held in the operable range, the imaging information calculation section 35 takes an image of each of the markers 8a and 8b. The taken image obtained by the imaging element 40 includes an image (target image) of each of the markers 8a and 8b which are imaging targets. FIG. 9 shows an example of the taken image including the target images. Using image data of the taken image including the target images, the image processing circuit 41 calculates a coordinate set representing the position of each of the markers 8a and 8b in the taken image.

The target images appear as high brightness areas in the image data of the taken image. Therefore, the image processing circuit 41 first detects the high brightness areas as candidates of the target images. Next, based on the size of each detected high brightness area, the image processing circuit 41 determines whether or not the high brightness area is a target image. The taken image may include images other than the target images (images 8a' and 8b' of the markers 8a and 8b) due to sunlight coming through a window or light of a fluorescent lamp. The determination is performed in order to distinguish the target images 8a' and 8b' from the other images so that the target images are accurately detected. Specifically, it is determined whether or not each detected high brightness area has a size within a predetermined size range. When the high brightness area has a size within the predetermined size range, the high brightness area is determined to be a target image; whereas when the high brightness area has a size outside the predetermined size range, the high brightness area is determined not to be a target image.

The image processing circuit 41 calculates the position of a high brightness area which is determined to be a target image as a result of the determination. Specifically, the image processing circuit 41 calculates the position of the center of gravity of the high brightness area. If the target images are accurately detected, two high brightness areas are determined to be target images by the determination. Therefore, two positions are calculated. The position in the taken image is represented with a coordinate system (x-y coordinate system) in which the upper left corner of the taken image is the origin, the downward direction from the origin is a positive y-axis direction, and the rightward direction from the origin is a positive x-axis direction. Accordingly, the image processing circuit 41 outputs data on the two coordinate set values indicating the two positions obtained by the calculation. The output data on the coordinate set values is transmitted to the game apparatus 3 as operation data by the microcomputer 42 as described above.

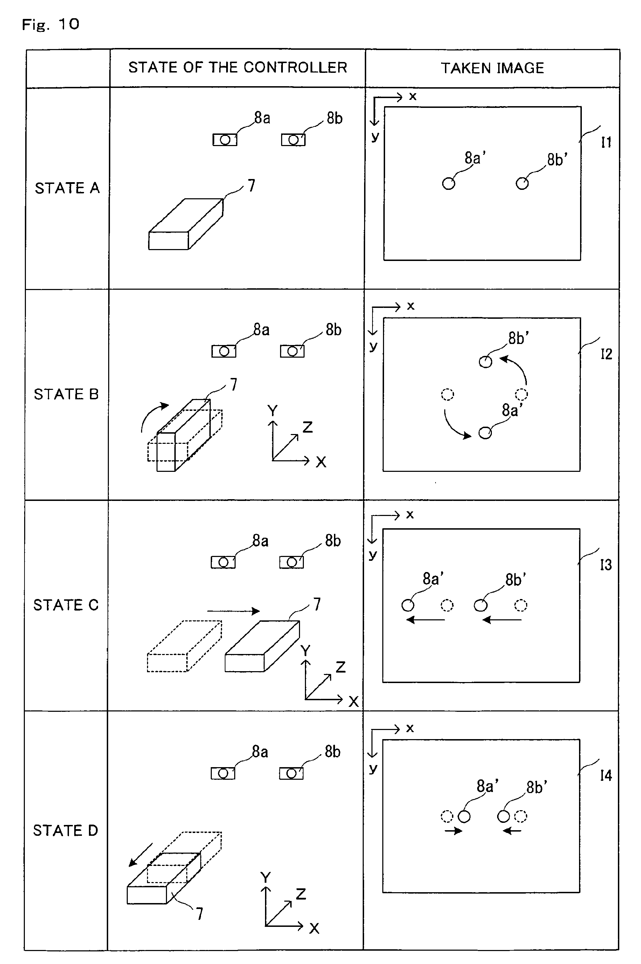

Using the data on the coordinate set values included in the received operation data, the game apparatus 3 can calculate the indicated position (the position indicated by the controller 7 on the display screen), the rotation angle (posture) of the controller 7 around the indicated direction, and the distance from the controller 7 to each of the markers 8a and 8b. FIG. 10 shows a change of the taken image when the position and/or the direction of the controller 7 is changed. FIG. 10 shows the correspondence between the state of the controller 7 and the taken image obtained when the controller 7 is in the respective state. In FIG. 10, a taken image I1 is obtained when the controller 7 is in state A. In the taken image I1, the target images 8a' and 8b' of the markers 8a and 8b are located in the vicinity of the center of the taken image I1. The target images 8a' and 8b' are located generally parallel to the X-axis direction.

State B shown in FIG. 10 is obtained by rotating the controller 7 at 90° clockwise around the indicated direction as an axis (around the Z axis) from state A. In this specification, the terms "clockwise" and "counterclockwise" used regarding the controller 7 refer to the rotation directions when seen from behind the controller 7 (from the negative end of the Z-axis direction in FIG. 3A; i.e., from the rear surface of the housing 31). In state B, a taken image I2 is obtained by the imaging information calculation section 35. In the taken image I2, the target images 8a' and 8b' have been moved on an arc at 90° counterclockwise from the taken image I1. Accordingly, the posture of the controller 7 with respect to the indicated direction as an axis of rotation is found by detecting the direction of the target images in the taken image (the direction of the image 8b' with respect to the image 8a', or the direction of the image 8a' with respect to the image 8b').

State C shown in FIG. 10 is obtained by translating the controller 7 rightward (in the positive x-axis direction) from state A. In state C, a taken image I3 is obtained by the imaging information calculation section 35. In the taken image I3, the target images 8a' and 8b' have been moved leftward (in the negative x-axis direction) from the taken image I1. In state C, the indicated direction of controller 7 is directed rightward with respect to state A. The indicated direction of controller 7 can be directed rightward by rotating the controller 7 around the Y axis as well as translating the controller 7 rightward. When the controller 7 is rotated around the Y axis, substantially the same taken image as the taken image I3 is obtained. Therefore, when the controller 7 is moved (rotated) so as to direct the indicated direction of the controller 7 rightward, substantially the same taken image as the taken image I3 is obtained. Namely, an image in which the target images 8a' and 8b' have been translated is obtained. Accordingly, the indicated direction of the controller 7 can be found by detecting the positions of the target images in the taken image (in the example described below, the position of an intermediate point between the images 8a' and 8b'). In this specification, the term "intermediate" means substantially exactly halfway between the two points, coordinate sets or images.

State D shown in FIG. 10 is obtained by moving the controller 7 to be farther from the markers 8a and 8b (i.e., translating the controller 7 rearward) from state A. In state D, a taken image I4 is obtained by the imaging information calculation section 35. In the taken image I4, the distance between the target images 8a' and 8b' is shorter than in the taken image I1. Accordingly, the moving state of the controller 7 in the indicated direction (the distance from the controller 7 to the markers 8a and 8b) can be found by detecting the distance between the two target images in the taken image (the distance between the images 8a' and 8b' ; when the two target images are considered as one integral target image, the size of the target image).

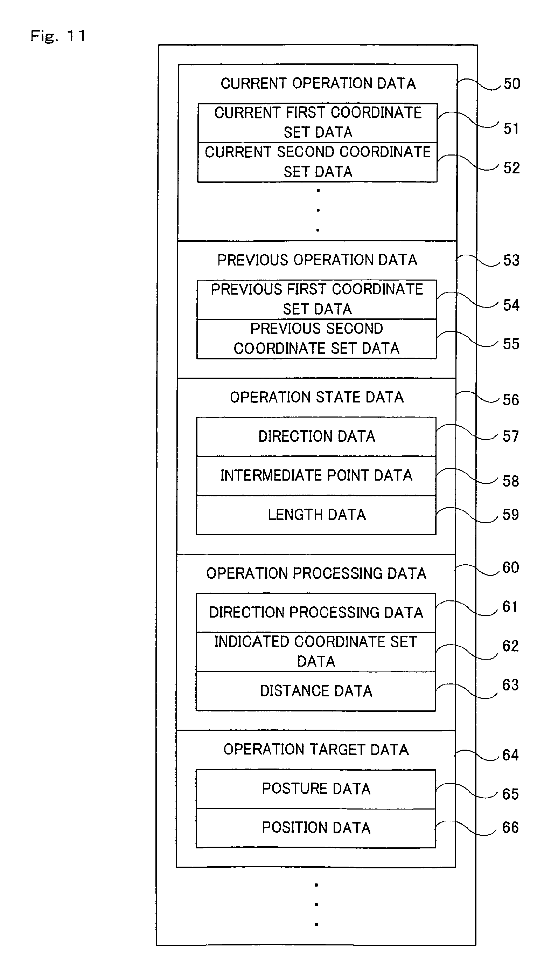

Next, the game processing executed by the game apparatus 3 will be described in detail. First, main data used for the game processing will be described with reference to FIG. 11. FIG. 11 shows main data stored on the main memory 13 of the game apparatus 3. As shown in FIG. 11, the main memory 13 has stored thereon current operation data 50, previous operation data 53, operation state data 56, operation processing data 60, operation target data 64 and the like. In addition to the data shown in FIG. 11, the main memory 13 has stored thereon other data required for the game processing including data regarding a player character appearing in the game (imagedata, position data, etc. of the player character) and data regarding the game space (topography data, etc.).

The current operation data 50 is a latest data transmitted from the controller 7. The current operation data 50 includes current first coordinate set data 51 and current second coordinate set data 52. The current first coordinate set data 51 represents a position of the image of one of the two marks (the position in the taken image). The current second coordinate set data 52 represents a position of the image of the other mark (the position in the taken image). The position of the image of each mark is represented with the x-y coordinate system (see FIG. 9). Hereinafter, the coordinate set represented by the current first coordinate set data 51 will be referred to as a "first coordinate set", and the coordinate set represented by the current second coordinate set data 52 will be referred to as a "second coordinate set". The first coordinate set and the second coordinate set will be distinguished from each other in order to accurately calculate direction data 57 described later. Either one of the first coordinate set and the second coordinate set may represent the position of the image of the marker 8a or the marker 8b. However, in the case where the first coordinate set represents the image of one of the markers in one frame, the first coordinate set needs to represent the image of the same marker in the next frame (see steps S13 through S15 described later).

The current operation data 50 includes data obtained from the operation section 32 and the acceleration sensor 37 in addition to the coordinate set data obtained from the taken image (the current first coordinate set data 51 and the current second coordinate set data 52). The game apparatus 3 obtains the operation data from the controller 7 at a predetermined time interval (for example, at an interval of 1 frame). The latest data among the operation data obtained is stored on the main memory 13 as the current operation data 50.

The previous operation data 53 includes previous first coordinate set data 54 and previous second coordinate set data 55. In this specification, the term "previous" means "immediately previous". The previous first coordinate set data 54 is the first coordinate set data obtained immediately before the current first coordinate set data 51. Namely, when new operation data is obtained, the data which has been the current first coordinate set data 51 so far is stored as the previous first coordinate set data 54. One of the two pieces of coordinate set data included in the new operation data is stored on the main memory 13 as the current first coordinate set data 51. Similarly, the previous second coordinate set data 55 is the second coordinate set data obtained immediately before the current second coordinate set data 52. Namely, when new operation data is obtained, the data which has been the current second coordinate set data 52 so far is stored as the previous second coordinate set data 55. The other of the two pieces of coordinate set data included in the new operation data (the data which is not the data representing the first coordinate set) is stored on the main memory 13 as the current second coordinate set data 52.

The operation state data 56 represents an operation state of the controller 7 which is determined based on the taken image. The operation state data 56 represents a position, direction, and size of the target image included in the taken image. The operation state data 56 includes direction data 57, intermediate point data 58, and length data 59. The direction data 57 represents a direction from the first coordinate set to the second coordinate set. In this embodiment, the direction data 57 is data on a two-dimensional vector having a position of the first coordinate set as a start point and a position of the second coordinate set as an end point. The direction data 57 represents a direction of the target image (markers 8a and 8b) in the taken image. The intermediate point data 58 represents a coordinate set of a point intermediate between the first coordinate set and the second coordinate set. In the case where the image of the marker 8a and the image of the marker 8b are considered as one integral target image, the intermediate point data 58 represents a position of the target image. The length data 59 represents a length of a distance between the first coordinate set and the second coordinate set. In the case where the image of the marker 8a and the image of the marker 8b are considered as one integral target image, the length data 59 represents a size of the target image.

The operation processing data 60 is calculated during the process of calculating the operation target data 64 from the operation state data 56. The operation processing data 60 includes direction processing data 61, indicated coordinate set data 62, and distance data 63. The direction processing data 61 is calculated during the process of calculating posture data 65 of the operation target data 64 from the direction data 57. The direction processing data 61 represents, for example, a difference between a predetermined reference direction and a direction represented by the direction data 57 (angular difference). The indicated coordinate set data 62 is calculated from the intermediate point data 58, and represents a coordinate set of an indicated position on the display screen of the monitor 2. The indicated coordinate set data 62 is calculated during the process of calculating position data 66 of the operation target data 64. The distance data 63 represents a distance from the imaging means of the controller 7 (the imaging information calculation section 35) to the imaging target (markers 8a and 8b). The distance data 63 is calculated during the process of calculating the position data 66 from the length data 59. The data 61 through 63 included in the operation processing data 60 are used for calculating the operation target data 64 when necessary, but not necessarily.

The operation target data 64 represents a position and a posture of the operation target on the display screen or in the game space. The "operation target" may be an object displayed on the display screen, an object appearing in the virtual game space, or in the case where a virtual three-dimensional game space is constructed, a virtual camera for displaying the three-dimensional game space on the display screen. The operation target data 64 includes the posture data 65 and the position data 66. The posture data 65 represents a posture of the operation target. The position data 66 represents a position of the operation target in the game space or on the display screen.

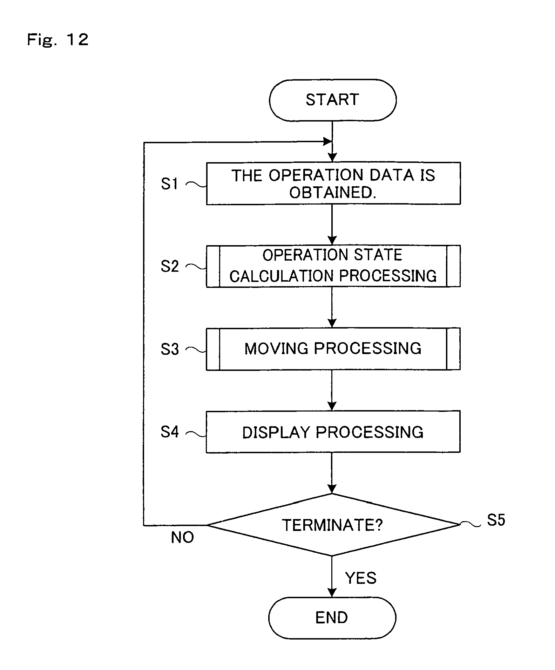

Next, the game processing executed by the game apparatus 3 will be described in detail with reference to FIG. 12 through FIG. 18B. FIG. 12 is a flowchart illustrating a flow of the game processing executed by the game apparatus 3. When the game apparatus 3 is turned on, the CPU 10 of the game apparatus 3 executes a start program stored on the boot ROM (not shown) to initialize each unit such as the main memory 13. The game program stored on the optical disc 4 is read into the main memory 13, and the CPU 10 starts the execution of the game program. The flowchart shown in FIG. 12 illustrates the game processing after the above-described processing is completed. In the following description given with reference to FIG. 12 through FIG. 18B, the game processing regarding the position and the direction of the controller 7 will be explained in detail, and other game processing not directly relevant to the present invention will be omitted.

With reference to FIG. 12, in step S1, the operation data is obtained from the controller 7. The CPU 10 stores the operation data on the main memory 13 as the current operation data 50. The contents of the data which have been the current first coordinate set data 51 and the current second coordinate set data 52 so far are stored on the main memory 13 as the previous first coordinate set data 54 and the previous second coordinate set data 55. At this point, it has not been determined which of the two pieces of coordinate set data included in the operation data is to be the current first coordinate set data 51 and which is to be the current second coordinate set data 52. Accordingly, at this point, neither the current first coordinate set data 51 nor the current second coordinate set data 52 is stored on the main memory 13, and the two pieces of coordinate set data included in the operation data are stored on the main memory 13 separately from the current first coordinate set data 51 and the current second coordinate set data 52.

The operation data obtained in step S1 includes the coordinate set data representing positions of the markers 8a and 8b in the taken image, and also data representing whether or not each operation button of the controller 7 has been pressed and data representing accelerations of the controller 7 in the up-down direction and the left-right direction. In this embodiment, the controller 7 transmits the operation data at a time interval shorter than one frame, and the CPU 10 obtains the operation data frame by frame. Accordingly, the processing loop of steps S1 through S5 shown in FIG. 12 is repeated frame by frame.

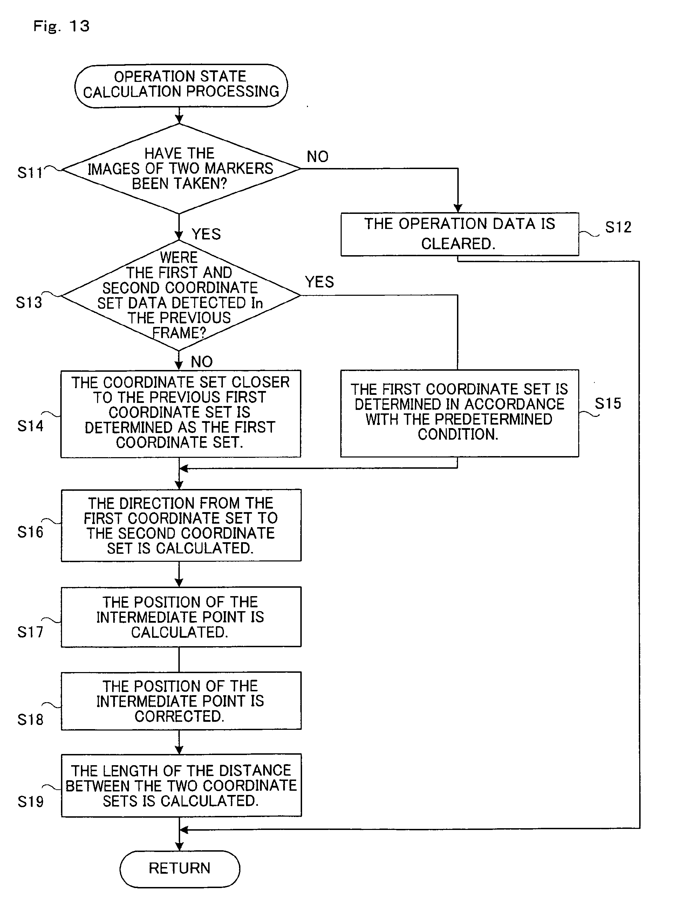

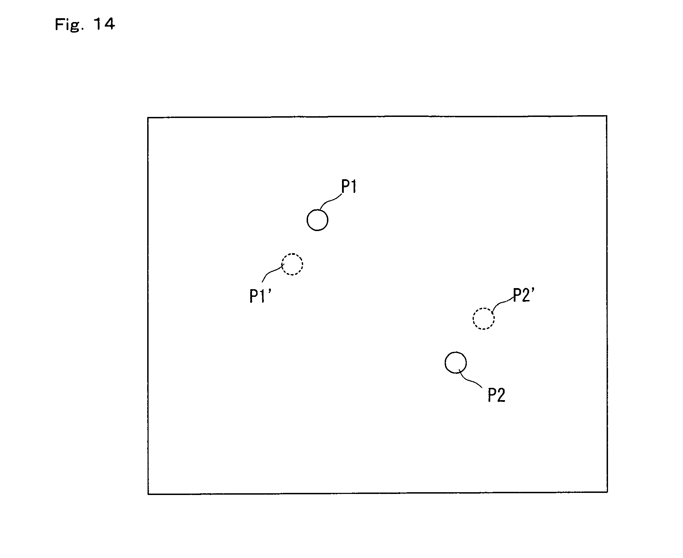

Next in step S2, operation state calculation processing is executed. In the operation state calculation processing, an operation state of controller 7 (a value corresponding to a position, a posture or the like of the controller 7) is calculated based on the operation data from the controller 7. Hereinafter, with reference to FIG. 13 and FIG. 14, the operation state calculation processing will be described in detail.

FIG. 13 is a flowchart illustrating a detailed flow of the operation state calculation processing (S2) shown in FIG. 12. The operation state calculation processing is executed as follows. First in step S11, it is determined whether or not images of the two markers 8a and 8b have been taken by the imaging information calculation section 35 of the controller 7. The determination in step S11 is executed in order to determine whether or not the controller 7 is held in the operable range. When the images of the two markers 8a and 8b have not been taken by the imaging information calculation section 35 (when the controller 7 is not held in the operable range), the operation data from the controller 7 does not include two pieces of coordinate set data. Namely, when the image of only one marker is taken by the imaging information calculation section 35, the image processing circuit 41 outputs only one piece of coordinate set data, and the operation data from the controller 7 includes only one piece of coordinate set data. When the image of neither the marker 8a nor 8b is taken by the imaging information calculation section 35, the image processing circuit 41 does not output any coordinate set data, and the operation data from the controller 7 does not include any coordinate set data. Accordingly, the determination in step S11 can be performed based on whether or not the operation data obtained in step S1 includes two pieces of coordinate set data. When it is determined in step S11 that the images of the two markers 8a and 8b have been taken, processing in step S13 is executed. When it is determined in step S11 that the images of the two markers 8a and 8b have not been taken, processing in step S12 is executed.

In step S12, the contents of the operation state data 56 stored on the main memory 13 are cleared. In the case where the operation state data 56 is not stored on the main memory 13, the operation target is not moved in moving processing described later. Namely, in this embodiment, in the case where the images of two markers 8a and 8b are not taken, no game processing is executed. After step S12, the CPU 10 terminates the operation state calculation processing.

In steps S13 through S15, it is determined which of the two pieces of coordinate set data represents the first coordinate set and which of the data represents the second coordinate set. FIG. 14 illustrates the processing for determining which is the first coordinate set and which is the second coordinate set. In FIG. 14, point P1' indicated with the dashed circle represents the position of the previous first coordinate set, and point P2' indicated with the dashed circle represents the position of the previous second coordinate set. Points P1 and P2 indicated with the solid circles show the positions of the coordinate sets represented by the two pieces of coordinate set data obtained at the current time.

Referring to FIG. 14, it cannot be detected, only from the coordinate sets P1 and P2, which of the coordinate sets P1 and P2 represented by the two pieces of coordinate set data obtained at the current time is the first coordinate set and which is the second coordinate set. Namely, the game apparatus 3 cannot determine, only from the coordinate sets P1 and P2, whether the coordinate set P1' has moved to become the coordinate set P1 or the coordinate set P2' has moved to become the coordinate set P1. Either one of the first coordinate set and the second coordinate set may represents the position of the image of the marker 8a or the marker 8b. It is important, however, to correctly detect which data represents the first coordinate set and which data represents the second coordinate set, in order to calculate the direction from the first coordinate set to the second coordinate set (step S16 described later). If the first coordinate set and the second coordinate set are detected oppositely, the direction obtained by the calculation is the opposite. If the previous first coordinate set is detected as the current second coordinate set, for example, the direction calculated in step S16 is incorrect.

In order to avoid this, in this embodiment, the first coordinate set and the second coordinate set are detected based on the distances between the previous coordinate sets and the current coordinate sets. Specifically, among the two coordinate sets newly obtained currently, the coordinate set which is closer to the previous first coordinate set is determined as the first coordinate set, and the other coordinate set is determined as the second coordinate set. In the example shown in FIG. 14, the coordinate set P1 which is closer to the previous coordinate set P1' is set as the first coordinate set, and the other coordinate set P2 is set as the second coordinate set. In the case where the controller 7 is rotated at an angle greater than 90° from one frame to the next frame, the coordinate set which is farther from the previous first coordinate set is the correct first coordinate set. However, it is considered that the controller 7 cannot actually rotate at an angle greater than 90° during one frame because the time interval at which the coordinate sets are obtained (the time interval at which the imaging information calculation section 35 takes the images) is usually very short (for example, an interval of 1/200 sec.). Therefore, the first coordinate set can be correctly detected by setting the coordinate set closer to the previous first coordinate set as the first coordinate set.

Specifically, in step S13, it is determined whether or not the first coordinate set and the second coordinate set were detected in the previous frame. The determination in step S13 is performed based on whether or not the operation state data 56 is stored on the main memory 13. When the processing in step S12 was executed in the previous frame, the operation state data 56 is not stored on the main memory 13. In this case, at least one of the first coordinate set and the second coordinate set was not obtained in the previous frame, and so the first coordinate set and the second coordinate set cannot be determined using the previous coordinate sets. When the processing in step S13 was executed in the previous frame, the operation state data 56 is stored on the main memory 13. In this case, the first coordinate set and the second coordinate set can be determined using the previous coordinate sets. The processing in step S13 is executed in order to determine whether or not the first coordinate set and the second coordinate set are to be determined using the previous coordinate sets. When it is determined in step S13 that the first coordinate set and the second coordinate set were detected in the previous frame, processing in step S14 is executed. When it is determined in step S13 that at least one of the first coordinate set and the second coordinate set was not detected in the previous frame, processing in step S15 is executed.

In step S14, among the two coordinate sets represented by the two pieces of coordinate set data included in the operation data obtained in step S1, the coordinate set closer to the previous first coordinate set is determined as the first coordinate set. Specifically, the CPU 10 refers to the previous first coordinate set data 54 stored on the main memory 13 and the two pieces of coordinate set data included in the operation data, and specifies, among the coordinate sets represented by the two pieces of coordinate set data, the coordinate set which is closer to the coordinate set represented by the previous first coordinate set data 54. The CPU 10 stores coordinate set data on the specified coordinate set on the main memory 13 as the current first coordinate set data 51, and also stores coordinate set data on the other coordinate set on the main memory 13 as the current second coordinate set data 52.

In step S15, one of the coordinate sets represented by the two pieces of coordinate set data is determined as the first coordinate set in accordance with a predetermined condition. The predetermined condition may be any condition. For example, the CPU 10 determines the coordinate set having a smaller y-axis coordinate value as the first coordinate set, and determines the other coordinate set as the second coordinate set. Data on the coordinate set determined as the first coordinate set is stored on the main memory 13 as the current first coordinate set data 51, and data on the coordinate set determined as the second coordinate set is stored on the main memory 13 as the current second coordinate set data 52.

In step S16, a direction from the first coordinate set to the second coordinate set is determined. Specifically, the CPU 10 refers to the current first coordinate set data 51 and the current second coordinate set data 52 to calculate a vector having a position of the first coordinate set as a start point and a position of the second coordinate set as an end point. Data on the calculated vector is stored on the main memory 13 as the direction data 57. The direction of the calculated vector corresponds to a rotation angle of the controller 7 around the indicated direction. Namely, as a result of the processing in step S16, the rotation of the controller 7 around the indicated direction is calculated.

Next in step S17, a coordinate set of an intermediate point between the first coordinate set and the second coordinate set is calculated. Specifically, the CPU 10 refers to the current first coordinate set data 51 and the current second coordinate set data 52 to calculate the coordinate set of the intermediate point. Data on the calculated coordinate set of the intermediate point is stored on the main memory 13 as the intermediate point data 58. The intermediate point data 58 represents a position of the target image (the markers 8a and 8b) in the taken image.

Next in step S18, the coordinate set of the intermediate point calculated in step S17 is corrected. FIG. 15 illustrates the processing in step S18 shown in FIG. 13. FIG. 15 shows the correspondence between the state of the controller 7 and the taken image obtained when the controller 7 is in the respective state. In FIG. 15, in both state A and state B, the center of the display screen of the monitor 2 is the indicated position by the controller 7. In state A, the top surface of the controller 7 is directed upward (in this embodiment, this state will be referred to as the "reference state"); whereas in state B, the top surface of the controller 7 is directed rightward. Since the markers 8a and 8b are located above the display screen, the positions of the markers 8a and 8b do not match the indicated position (at the center of the display screen). Therefore, in state A, the target images are above the center of the taken image. In state B, the target images are left to the center of the taken image. As seen from FIG. 15, since the positions of the markers 8a and 8b do not match the indicated position (at the center of the display screen), the positions of the target images in the taken image change by the rotation angle of the controller 7 around the indicated direction as an axis. For this reason, the indicated position cannot be accurately calculated based on the positions of the target images.

In order to avoid this, in step S18, the coordinate set of the intermediate point calculated in step S17 is corrected based on the direction calculated in step S16. Specifically, the coordinate set of the intermediate point calculated in step S17 is corrected into the coordinate set obtained in the case where the controller 7 is in the reference state. More specifically, the coordinate set of the intermediate point calculated in step S17 is moved on an arc around the center of the taken image as an axis by an amount corresponding to an angular difference between the direction calculated in step S16 and the direction in the reference state. In state B in FIG. 15, a vector inclined at 90° counterclockwise from the reference state is calculated in step S16. Therefore, it is understood that the controller 7 is inclined at 90° clockwise from the reference state. Accordingly, in step S18, the coordinate set of the intermediate point calculated in step S17 is moved on an arc at 90° clockwise around the center of the taken image as an axis. Data representing the coordinate set of the intermediate point corrected as above in step S18 is stored on the main memory 13 as the updated intermediate point data 58. Based on the corrected coordinate set of the intermediate point obtained in step S18, the game apparatus 3 can calculate the indicated position by the controller 7.

Next in step S19, a length of a distance between the first coordinate set and the second coordinate set is calculated. Specifically, the CPU 10 refers to the current first coordinate set data 51 and the current second coordinate set data 52 to calculate the length. Data on the calculated length is stored on the main memory 13 as the length data 59. The length corresponds to the distance from the controller 7 to the markers 8a and 9b. After step S19, the CPU 10 terminates the operation state calculation processing.

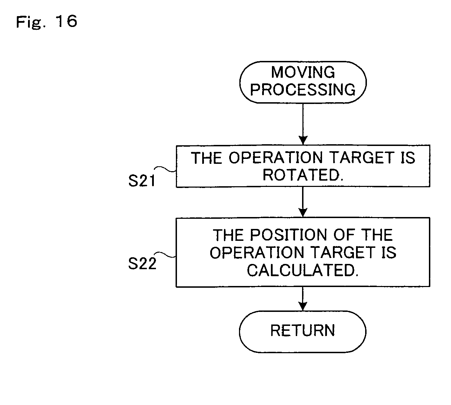

Returning to FIG. 12, in step S3, the moving processing of moving the operation target is executed. With reference to FIG. 16, the moving processing will be described in detail.

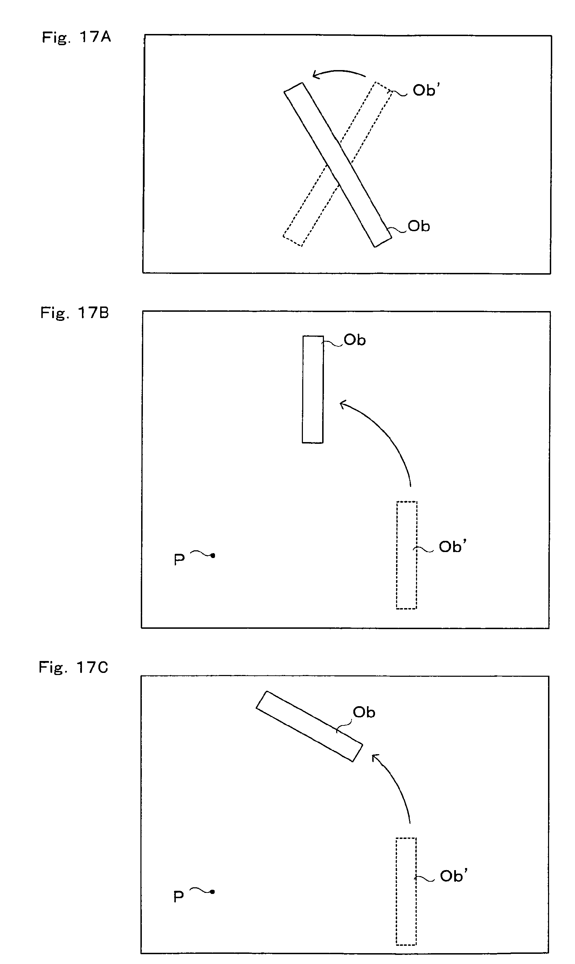

FIG. 16 is a flowchart illustrating a detailed flow of the moving processing (S3) shown in FIG. 12. The moving processing is executed as follows. First in step 521, the operation target is rotated in the direction calculated in step S16. As described above, the operation target may be an object appearing in the virtual game space or a virtual camera. Hereinafter, variations of the rotation motion of the operation target will be described with reference to FIG. 17A through FIG. 18B.

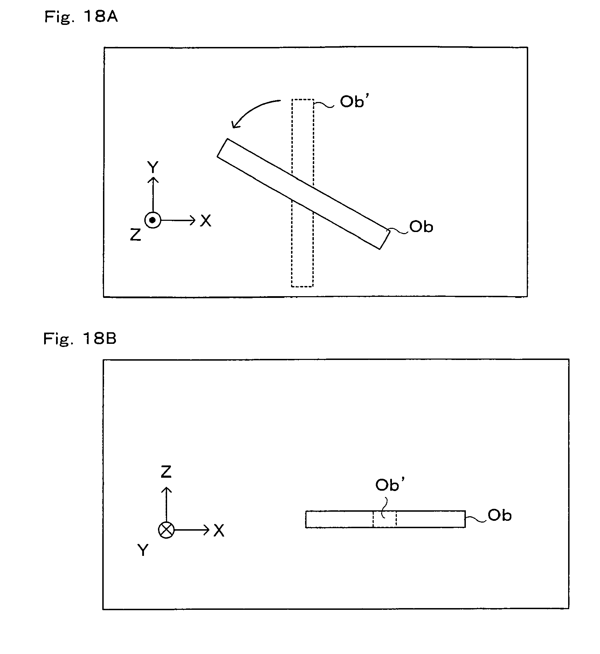

FIG. 17A through FIG. 18B show examples of the rotation motion of the operation target. In FIG. 17A through FIG. 18B, the operation target is an object appearing in the game space. A pre-rotation object Ob' is indicated with the dashed line, and a post-rotation object Ob is indicated with the solid line. The rotation motion of the operation target performed in step S21 may be for changing the position of the operation target on the display screen or in the game space, for changing the posture of the operation target, or for changing both the position and the posture of the operation target. Namely, the rotation motion of the operation target may be, as shown in FIG. 17A, a motion of changing the posture of the operation target without changing the position thereof; as shown in FIG. 17B, a motion of moving the operation target on an arc around a predetermined position P as an axis without changing the posture (direction) thereof; or as shown in FIG. 17C, a motion of moving the operation target on an arc around the predetermined point P as an axis while rotating the operation target, so that both the position and the posture of the operation target are changed. In the case where the operation target is located in the virtual three-dimensional game space, the operation target does not especially need to rotate around an axis vertical to the display screen. FIG. 18A shows the object rotating in the virtual three-dimensional game space. In the case where the object rotates as shown in FIG. 18A, the game space seen from a direction parallel to the Y axis is displayed on the display screen as shown in FIG. 18B. The processing of rotating the object may be processing of rotating the object on the display screen or processing of rotating the object in the game space. In the latter case, the rotation of the object is not easily seen on the display screen, but this is also in the scope of the present invention.

In step S21, specifically, a posture and/or a position of the operation target is determined in accordance with the direction of the vector represented by the direction data 57 stored on the memory 13 in step S16. More specifically, the determination may be performed as follows. The correspondence between the direction of the vector and the posture and/or the position of the operation target when the vector is inclined in the respective direction is determined in advance. Based on the correspondence, the posture and/or the position of the operation target is determined from the vector. Alternatively, the determination may be performed as follows. An angle made by the vector in the previous frame and the vector in the current frame (angular difference) is calculated, and a changing amount of the posture and/or the position of the operation target is determined based on the angular difference. For example, the operation target may be rotated at an angle in proportion to the angular difference. Data representing the angular difference corresponds to the direction processing data 61 in the operation processing data 60. When the posture and/or the position of the operation target is determined as described above, the contents of the operation target data 64 stored on the mainmemory 13 are updated. Namely, data representing the posture determined in step S21 is stored on the main memory 13 as the posture data 65, and data representing the position determined in step S21 is stored on themainmemory 13 as the position data 66.

In other embodiments, the processing may be set such that in the case where the direction of the vector calculated in step S16 is in a predetermined range of angles, the operation target is not rotated. The reason is that when the operation target rotates as a result of responding too sensitively to the rotation angle of the input device, the operability of the input device may be deteriorated. Depending on the type of, or the situation in, the game, the player may wish to maintain the operation target at a certain posture. If, in such a case, the operation target rotates as a result of responding too sensitively to the rotation angle of the input device, it becomes difficult to maintain the operation target at a certain posture and the operability of the input device is deteriorated. For example, the processing may be set such that the operation target is not rotated when the angle made by the vector and the y axis is in the range of -5° to 5°. Owing to such an arrangement, even if the controller 7 is rotated slightly, the same operation result as in the case where the controller 7 is maintained in a horizontal state is obtained. As described above, the operability of the input device can be improved by setting a so-called "play" margin in the rotation operation performed on the controller 7.

Next in step S22, the operation target is translated. Namely, a post-movement position of the operation target is calculated. When the post-movement position of the operation target is determined in step S21 (when the rotation motion shown in FIG. 17B or FIG. 17C is performed), the processing in step S22 is omitted. When only the posture of the operation target is determined in step S21 (when the rotation motion shown in FIG. 17A is performed), the processing in step S22 is executed.

The translation motion of the operation target in step S22 is determined based on at least one of (i) the coordinate set of the intermediate point corrected in step S18 and (ii) the length of the distance calculated in step S19. Typically, the position of the operation target on the display screen (the position in the game space corresponding to the position on the display screen) is determined based on the coordinate set of the intermediate point corrected in step S18. Based on the distance calculated in step S19, the position of the operation target in the depth direction with respect to the display screen is determined.

The position of the operation target on the display screen is calculated using a function of converting the coordinate set of the intermediate point into a coordinate set on the display screen of the monitor 2. This function converts the coordinate set values of the intermediate point which are calculated from one taken image into coordinate set values corresponding to the position on the display screen which is indicated by the controller 7 (indicated position) when such a taken image is taken. This is performed, for example, as follows. Predetermined reference values are set for both the coordinate set of the intermediate point and the indicated position on the display screen. A displacement of the coordinate set of the intermediate point from the reference values is calculated, and the positive/negative sign of the displacement is inverted and scaled at a predetermined ratio. Thus, a displacement of the current indicated position from the references value is calculated, and the current indicated position is set. This function allows the indicated position on the display screen to be calculated from the coordinate set of the intermediate point. Data representing the indicated position corresponds to the indicated coordinate set data 62 in the operation processing data 60. For converting the coordinate set of the intermediate point into a coordinate set representing the position in the game space (a corresponding coordinate set described later), the indicated position is further converted into the position in the game space corresponding to the indicated position. The "position in the game space corresponding to the indicated position" is a position, in the game space, which is displayed at the indicated position on the display screen.

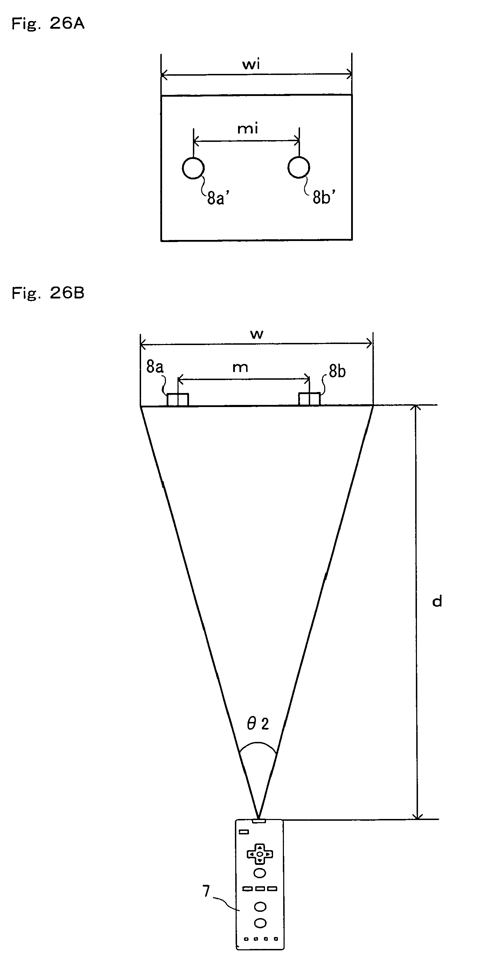

The position of the operation target in the depth direction with respect to the display screen is calculated based on the length calculated in step S19. Specifically, this is performed as follows. The correspondence between a predetermined position in the depth direction and a predetermined length is determined in advance. The position of the operation target is determined based on the difference between the length calculated in step S19 and the predetermined length. More specifically, the position of the operation target is determined such that as the difference obtained by subtracting the predetermined length from the length calculated in step S19 becomes greater, the position of the operation target becomes deeper. In the case where the difference is a negative value, the position of the operation target is determined to be forward with respect to the predetermined position (i.e., closer to the player in front of the display screen of the monitor 2). Alternatively, the position of the operation target in the depth direction may be determined based on the distance from the imaging means of the controller 7 (the imaging information calculation section 35) to the imaging target (the markers 8a and 8b) (see FIG. 26 described later). Such a distance is calculated from the length calculated in step S19. Data representing such a distance corresponds to the distance data 63 in the operation processing data 60.

Data representing the position of the operation target determined in step S22 is stored on the main memory 13 as the position data 66. In step S22, it is not absolutely necessary to determine both the position of the operation target on the display screen and the position thereof in the depth direction. Either one of the positions may be determined. For example, in the case where the game space is a two-dimensional plane, only the position of the operation target on the display screen may be determined based on the coordinate set of the intermediate point corrected in step S18. After steps S21 and S22, the CPU 10 terminates the moving processing.

In the moving processing in this embodiment, the movement of the operation target is controlled such that the operation target is always moved to the indicated position by the controller 7. In other embodiments, the movement processing may be executed such that when a predetermined operation is performed on the controller 7 (for example, the B button 32d is pressed), the operation target is moved to the indicated position by the controller 7 obtained at the time when such an operation is performed. In the case where the operation of moving the operation target and the operation of rotating the operation target are simultaneously performed as in the above embodiment, the player may inadvertently rotate the controller 7 when intending to move the operation target, resulting in rotating the operation target despite his/her intention. In the case where the processing is set such that the operation target is moved only when necessary, the difficulty in simultaneously moving and rotating the operation target can be alleviated.

Returning to FIG. 12, in step S4 after step S3, display processing is executed. The CPU 10 refers to the operation target data 64 stored on the main memory 13 to generate an image in accordance with the posture and the position determined in step S3. The CPU 10 displays the generated image on the display screen of the monitor 2. For example, when the operation target is an object displayed on the display screen, the object is displayed on the display screen with the posture and the position determined in step S3. For example, in the case where the operation target is a virtual camera, an image of the game space seen from the virtual camera which is set at the posture and the position determined in step S3 is generated, and the generated image is displayed. By repeating the processing in step S4 frame by frame, a moving picture representing the operation target rotating can be displayed.

In step S5, it is determined whether or not to terminate the game. The game is terminated when, for example, a condition for terminating the game (for example, the parameter indicating the stamina of the player character becomes zero) or the player has performed an operation of terminating the game. When it is determined not to terminate the game, the processing is returned to step S1 and the processing in steps S1 through S5 is repeated until it is determined to terminate the game in step S5. When it is determined to terminate the game, the CPU 10 terminates the game processing shown in FIG. 12.

As described above, in this embodiment, a value corresponding to the posture of the controller 7 rotating around the front-rear direction thereof as an axis can be calculated from the taken image obtained by the imaging information calculation section 35. Based on the posture of the controller 7, the operation target can be rotated. With such settings, the player can perform a game operation of rotating the controller 7 around the front-rear direction thereof as an axis so as to cause the operation target to rotate in accordance with the rotation of the controller 7. Thus, the game apparatus 3 can allow the player to perform a new game operation of rotating the operation target by rotating the controller 7.

According to the present invention, the game apparatus 3 only needs to calculate the rotation of the controller 7 around the indicated direction as an axis. The game apparatus 3 does not need to detect the indicated position by the controller 7 or the distance between the controller 7 and the imaging target (the markers 8a and 8b). In order to calculate the rotation of the controller 7 around the indicated direction thereof as an axis, the game apparatus 3 only needs to obtain information representing at least the direction from the taken image. Therefore, the image processing circuit 41 may output the information representing the direction, instead of the coordinate sets of the above-mentioned two positions. Specifically, the image processing circuit 41 may calculate data on a vector representing the direction from the position of the image of the marker 8a to the position of the image of the marker 8b (or the direction from the position of the image of the marker 8b to the position of the image of the marker 8a). Since this vector only needs to represent the direction, the image processing circuit 41 may output data on a unit vector having a constant size.

The indicated position by the controller 7 can be detected by calculating the position of the target image in the taken image. The position of the target image in the taken image can be represented with the position of the coordinate set of the intermediate point as described in the above embodiment. Accordingly, in the case where the indicated position by the controller 7 is used for moving the operation target, the image processing circuit 41 may output data representing the position of the target image in the taken image and data representing the direction. Namely, the image processing circuit 41 may output the data on the vector representing the direction from the position of the image of the marker 8a to the position of the image of the marker 8b (or the direction from the position of the image of the marker 8b to the position of the image of the marker 8a) and the data on the coordinate set of the intermediate point, instead of outputting the data on the coordinate sets representing the positions of the images of the markers 8a and 8b. In this case, the game apparatus 3 does not need to calculate the direction data or the intermediate point data (steps S16 and S17), the processing load of the game apparatus 3 can be alleviated. The correction processing in step S18 may be executed by the image processing circuit 41 or by the game apparatus 3.

In other embodiments, the imaging information calculation section 35 may not include the image processing circuit 41. In this case, the imaging information calculation section 35 outputs the image data of the taken image to the microcomputer 42, and the image data is transmitted from the controller 7 to the game apparatus 3 as the operation data. The game apparatus 3 calculates the direction data based on the image data. As described above, the processing of calculating the direction data from the image data of the taken image may be partially executed by a dedicated circuit (the image processing circuit 41), entirely executed by such a circuit, or executed by the game apparatus 3 as software processing.

In the above embodiment, the two markers 8a and 8b for outputting infrared light are the imaging targets. Some other elements may be the imaging targets. An imaging target may be anything, an image of which can provide a direction. For example, three or more markers may be imaging targets, or one marker which can provide a direction can be an imaging target. In the case where one marker is the imaging target, it is desirable that the marker has a linear shape or the like, from which predetermined two points can be specified. The reason is that it is necessary to detect the direction from the marker. A circular shape is not desirable. The game apparatus 3 calculates the direction connecting the predetermined two points of the taken image to calculate the direction of the target image in the taken image. The marker is preferably a light emitting element. The marker may output light of other wavelengths than infrared, or may output white light. The frame of the display screen of the monitor 2 may be an imaging target, or the imaging target may be displayed on the display screen. With such a structure, it is not necessary to prepare a marker in addition to the monitor, and the structure of the system can be simplified.

In other embodiments, when the controller 7 goes outside the operable range, the operation target may be rotated using an output from the acceleration sensor. Specifically, when the determination result in step S11 in FIG. 13 is negative, processing of detecting the rotation state of the controller 7 around the indicated direction as an axis is executed using the output from the acceleration sensor, instead of the processing in step S12. The CPU 10 refers to data representing the acceleration included in the operation data to determine the rotation state of the controller 7. In the moving processing in step S3, the operation target is rotated in accordance with the rotation state determined by the above processing. Thus, even if the controller 7 goes outside the operable range, the operation of rotating the operation target can be continued. In the case where the controller 7 goes outside the operable range and then returns to the operable range with the posture thereof being changed, the posture of the controller 7 can be determined using an output from the acceleration. Therefore, the two markers can be each identified.

Now, it is assumed in the above embodiment that the controller 7 once goes outside the operable range and then returns to the operable range. In this case, it cannot be determined only from the taken image whether the controller 7 has returned to the operable range in an upward state (with the top surface thereof directed upward) or in a downward state (with the top surface thereof directed downward). The position of the target image in the taken image is different between the upward state and the downward state. Therefore, when the controller 7 returns to the operable range in the downward state, the indicated position cannot be accurately calculated based on the position of the target image.

Therefore, in other embodiments, when the controller 7 returns to the operable range after once going outside, the game apparatus 3 may determine whether or not the controller 7 is in the downward state using the detection result of the acceleration sensor 37. When it is determined that the controller 7 is in the downward state, the correction processing in step S18 is executed. This will be described with reference to the flowchart in FIG. 13. When the determination result of step S13 is negative, the CPU 10 refers to the acceleration data included in the operation data to determine whether or not the controller 7 is in the downward state. When it is determined that the controller 7 is in the downward state, the correction processing in step S18 is executed as follows. The coordinate set of the intermediate point is moved on an arc at an angle obtained by adding 180° to the angular difference between the direction calculated in step S16 and the direction in the reference state. This processing is continued until the next time that the controller 7 goes outside the operable range. Thus, even if the controller 7 returns to the operable range in the downward state, the indicated position by the controller 7 can be accurately calculated.

The above embodiment is applicable to various games in which the controller 7 is rotated around the indicated direction as an axis. Hereinafter, specific games will be described as examples.

(First Example)

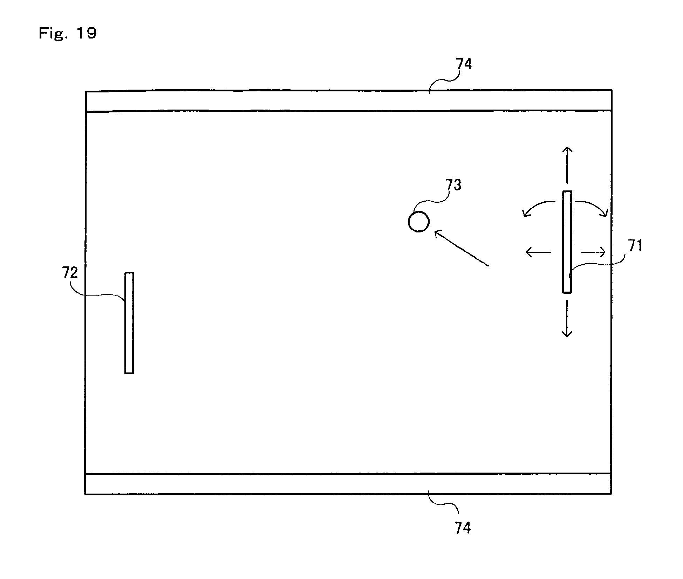

FIG. 19 shows an example of a game screen in a first example. In FIG. 19, plate-like objects 71 and 72, a ball object 73, and wall objects 74 are located in a two-dimensional game space. The plate-like object 71 is an operation target to be operated by the player. The plate-like object 71 is movable up, down, left and right on the display screen and rotatable by an operation of the player (as indicated by the arrows in FIG. 19). The plate-like object 72 is controlled by the CPU 10 of the game apparatus 3 and is movable up, down, left and right on the display screen and rotatable like the plate-like object 71. Hereinafter, the plate-like object 71 to be operated by the player will be referred to as a "player object", and the plate-like object 72 to be controlled by the CPU 10 will be referred to as an "opponent object". The ball object 73 (hereinafter, also referred to simply as a "ball") moves in the two-dimensional game space on the display screen. The ball 73 linearly moves in the game space, and when colliding against the player object 71, the opponent object 72, or the wall objects 74, bounces back and continues moving. The wall objects 74 are fixedly located at the top and bottom of the display screen. In the game in the first example, two parties fight against each other. More specifically, the game in the first example is a hockey game in which the player operates the player object 71 to hit the ball object 73 with the opponent object 72. The player operates the player object 71 so as to put the ball 73 into the opponent's side (the left end of the display screen, i.e., left to the opponent object 72) while hitting the ball 73 back such that the ball 73 does not reach the player's side (the right end of the display screen, i.e., right to the player object 71).

Next, a method for operating the player object 71 using the controller 7 will be described. The player object 71 moves (translates) up, down, left or right in accordance with a position designation operation performed by the controller 7. The "position designation operation" is an operation of designating the indicated position. Specifically, the position or the direction of the controller 7 is changed to change the position at which the phantom straight line extending from the front end of the controller 7 in the longitudinal direction crosses the display screen of the monitor 2. The indicated position is determined in accordance with the position or the direction of the controller 7. The player can move the indicated position up, down, left or right on the display screen to move the player object 71 up, down, left or right on the display screen. Specifically, the game apparatus 3 controls the operation of the player object 71 to be located at the indicated position.

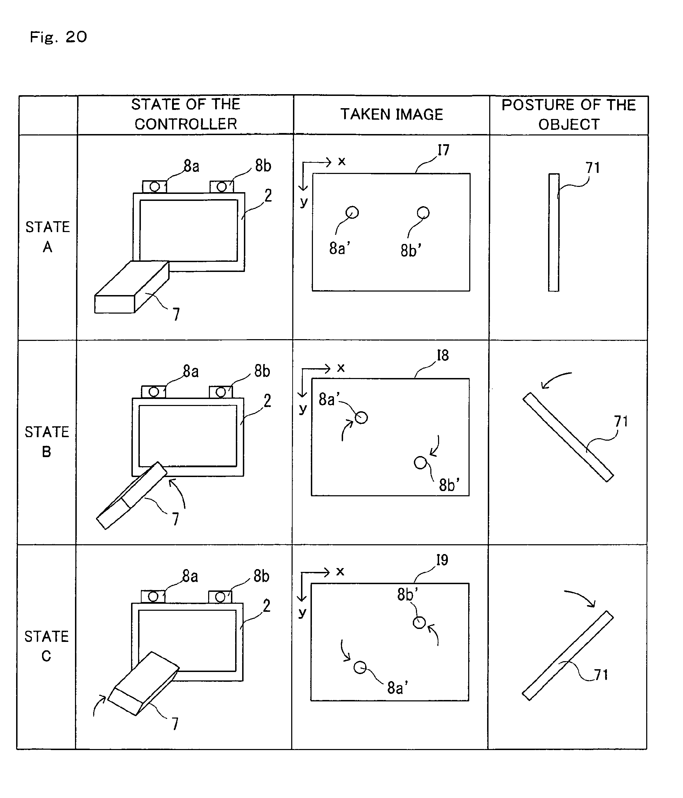

The player object 71 rotates around the center thereof in accordance with a rotation operation. The "rotation operation" is an operation of rotating the controller 7 around the indicated direction as an axis. FIG. 20 illustrates the operation of the player object 71 provided by the rotation operation. FIG. 20 shows the correspondence among the state of the controller 7, the taken image obtained when the controller 7 is in the respective state, and the posture of the player object 71 when the controller 7 is in the respective state.

In FIG. 20, in state A, the top surface of the controller 7 is directed upward. In a taken image I7 obtained in state A, the images 8a' and 8b' of the markers 8a and 8b are located horizontally (the y-axis coordinates of the images 8a' and 8b' are the same). In this state, theplayerobject 71 assumes a posture horizontal to the up-down direction of the display screen of the monitor 2. In this example, this state will be referred to as a "reference state".

In state B shown in FIG. 20, the controller 7 has been rotated counterclockwise at a predetermined angle from state A. In a taken image I8 obtained in state B, the images 8a' and 8b' have been moved on an arc clockwise at the predetermined angle from state A. In this state, the player object 71 assumes a posture rotated counterclockwise at the predetermined angle from the up-down direction of the display screen. In state C shown in FIG. 20, the controller 7 has been rotated clockwise at a predetermined angle from state A. In a taken image I9 obtained in state C, the images 8a' and 8b' have been moved on an arc counterclockwise at the predetermined angle from state A. In this state, the player object 71 assumes a posture rotated clockwise at the predetermined angle from the up-down direction of the display screen. As described above, the game apparatus 3 controls the posture of the player object 71 to rotate in the direction in which the controller 7 has been rotated from the reference state at the same angle as the controller 7.

Next, the game processing in the first example will be described in detail. In the first example, the length data 59 in the operation state data 56 shown in FIG. 11 is not necessary for the game processing and is not stored on the main memory 13. The direction processing data 61 and the distance data 63 in the operation processing data 60 are not necessary for the game processing and are not stored on the main memory 13. The operation target data 64 shown in FIG. 11 represents a position and a posture of the player object 71 as the operation target. Namely, the posture data 65 represents a posture of the player object 71. Specifically, the posture data 65 represents a vector indicating a direction of the player object 71 on the display screen. This vector is represented with a coordinate system in which the upper left corner of the display screen is the origin, the downward direction from the origin is a positive y'-axis direction, and the rightward direction from the origin is a positive x'-axis direction (x'-y' coordinate system). In this example, the vector represented by the posture data 65 indicates a direction vertical to the longitudinal direction of the rectangular player object 71. The position data 66 represents a position of the player object 71 on the display screen. A coordinate set representing the position is in the x'-y' coordinate system. In this example, the position represented by the position data 66 indicates the central position of the player object 71.

In the first example, the data shown in FIG. 11, image data of the objects, data representing the position and the posture of the opponent object 72, data representing the position and the velocity of the ball object 73, and the like are stored on the main memory 13.

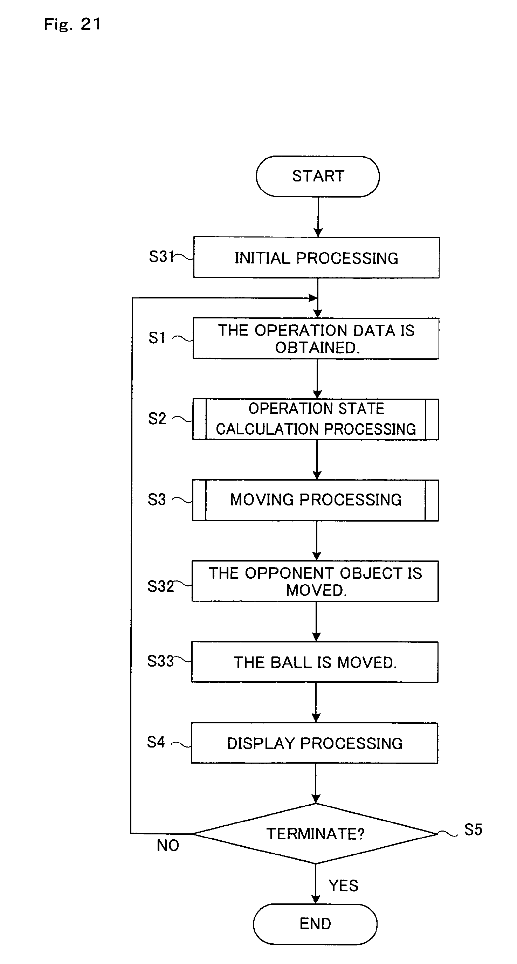

FIG. 21 is a flowchart illustrating a flow of the game processing in the first example. In FIG. 21, substantially the same steps as those in the game processing shown in FIG. 12 bear the same step numbers, and detailed descriptions thereof will be omitted. The processing until the processing in the flowchart shown in FIG. 21 is started is the same as in the case of FIG. 12.

The game processing in the first example is executed as follows. First in step S31, initial processing is executed. In the initial processing, the CPU 10 displays a game screen in an initial state. Namely, the objects 71 through 74 are located at respective initial positions. Regarding the operation target data 64, data representing the posture of the player object 71 in the initial state is stored on the main memory 13 as the posture data 65, and data representing the position of the player object 71 in the initial state is stored on the main memory 13 as the position data 66. The CPU 10 displays the game screen in which the objects 71 through 74 are at the respective initial positions on the monitor 2.

After step S31, the processing in step S1 described above is executed, and then the operation state calculation processing in step S2 is executed. In the operation state calculation processing in the first example, the processing of calculating the distance between the two coordinate sets (step S19) is not executed. The operation state calculation processing in the first example is substantially the same as described above with reference to FIG. 12 except for step S19.

Next, the moving processing in step S3 is executed. As described above with reference to FIG. 16, the processing of rotating the player object 71 (step S21) in the direction calculated in accordance with the rotation of the controller 7 around the indicated direction as an axis (around the direction calculated in step S16) is executed. Hereinafter, specific processing in step S21 in the first example will be described.

In step S21 in the first example, the vector representing the direction in the taken image (the direction in the x-y coordinate system) is converted into a vector representing a direction on the display screen (the direction in the x'-y' coordinate system). The "vector representing the direction in the taken image" is the vector calculated in step S16, which is represented by the direction data 57. By converting the vector into the vector representing the direction on the display screen, the vector representing the direction of the player object 71 is calculated. Specifically, in step S21, the direction of the vector represented by the direction data 57 stored on the main memory 13 is inverted regarding the x axis or the y axis. For example, where the vector represented by the direction data 57 is (vx1, vy1), the CPU 10 calculates the post-conversion vector as (-vx1, vy1). Thus, the vector is inverted regarding the y axis, i.e., converted into the vector representing the direction in the x'-y' coordinate system. The CPU 10 stores data representing the post-conversion vector on the main memory 13 as the updated posture data 65.

Next in step S22, the player object 71 is translated. Namely, a position of the player object 71 on the display screen is calculated. Specifically, like in step S22 described above, the CPU 10 calculates a coordinate set (indicated coordinate set), in the x'-y' coordinate system, which represents the indicated position on the display screen, from the coordinate set representing the intermediate point in the x-y coordinate system. Data on the calculated indicated coordinate set is stored on the main memory 13 as the indicated coordinate set data 62. Next, the calculated indicated coordinate set is determined as the position of the player object 71. In the case where the indicated coordinate set is outside a movable range of the player object 71 which is set in the game (for example, the area interposed between the wall objects 74) or the like, the position of the player object 71 is set at a different position from the indicated coordinate set, for example, in the vicinity of the boundary of the movable range. Data on the coordinate set representing the position of the player object 71 on the display screen (indicated coordinate set) determined in step S22 is stored on the memory 13 as the position data 66.

In step S32 after step S3, the opponent object 72 is moved. The CPU 10 determines a position and a posture of the opponent 72 after the movement in accordance with a predetermined algorithm. Next in step S33, the ball 73 is moved. The CPU 10 determines whether or not the ball 73 has collided against the player object 71, the opponent object 72, or the wall objects 74. When the ball 73 has collided, a post-collision moving direction of the ball 73 is determined based on the pre-collision moving direction of the ball 73 and an angle made by the ball and the object against which the ball 73 has collided. When ball 73 did not collide, the moving direction of the ball 73 is maintained. The velocity of the ball 73 may be changed in accordance with the moving velocity or the rotating velocity of the player object 71 or the opponent object 72 at the time of collision.

Next in step S4, the display processing is executed. Namely, the objects 71 through 73 are displayed on the display screen with the new positions and postures determined in steps S3 through S5. By repeating the processing in step S4 frame by frame, the objects 71 through 73 are displayed as moving. Next in step S5, it is determined whether or not to terminate the game. In the first example, this determination is performed based on, for example, the number of times that the ball 73 reached the player' s side or the opponent's side.

In the first example described above, the game can be enjoyed with a new game operation of moving or rotating the controller 7 to move or rotate the player object 71.

In the first example, one controller 7 is used to operate only the player object 71. Two controllers 7 may be used to operate two objects (for example, the objects 71 and 72 shown in FIG. 19). In this case, two players can operate the respective objects, each using one controller 7, and fight against each other.

(Second Example)

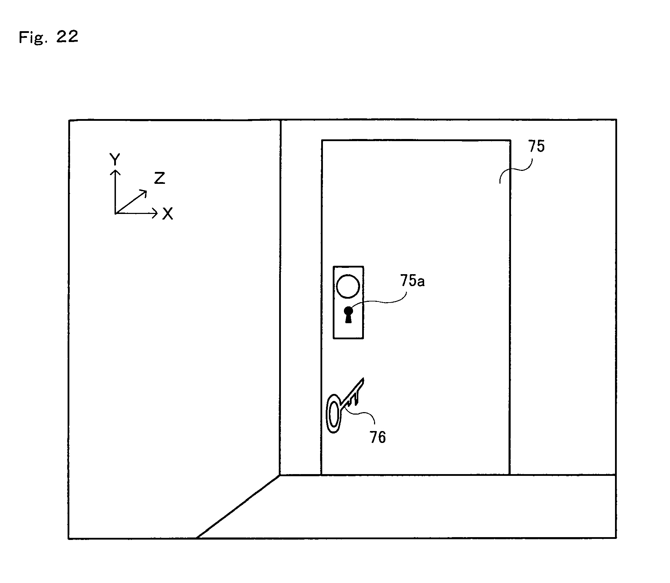

FIG. 22 shows an example of a game screen in a second example. FIG. 22 shows a game scene in which the player can open the door using a key. In FIG. 22, a three-dimensional game space is constructed, and a door 75 and a key 76 are located in the game space. The door 75 has a key hole 75a. The player can move or rotate the key 76 by operating the controller 7. The player performs an operation of moving the key 76 in the three-dimensional game space using the controller 7 and thus puts the key 76 into the key hole 75a. When the player performs an operation of rotating the key 76 in the state where the key 76 is in the key hole 75a, the door 75 opens. An X-Y-Z coordinate system shown in FIG. 22 is a coordinate system in a three-dimensional game space and is not actually displayed on the display screen. In this example, the Z-axis direction is the depth direction, which is parallel to the viewing direction of a virtual camera.

In the second example, the key 76 moves in the three-dimensional game space in accordance with the position designation operation and a depth designation operation performed by the controller 7. The "depth designation operation" is an operation of changing the distance from the controller 7 to the markers 8a and 8b. Specifically, the game apparatus 3 moves the key 76 in the X-axis direction and the Y-axis direction in the game space in accordance with the position designation operation. In accordance with the depth designation operation, the game apparatus 3 moves the key 76 in the Z-axis direction in the game space. The key 76 is rotated by the rotation operation performed by the player. In this example, the key 76 rotates around the Z axis in the game space.

Next, the game processing in the second example will be described in detail. In the second example, the operation target data 64 stored on the main memory 13 (see FIG. 11) represents a position and a posture of the key 7 6 as the operation target. Namely, the posture data 65 represents a posture of the key 76 rotating around the Z axis. The position data 66 represents a position of the key 76 in the three-dimensional game space. The position data 66 represents a three-dimensional coordinate set. In the second example, the direction processing data 61 is not necessary for the game processing and is not stored on the main memory 13.

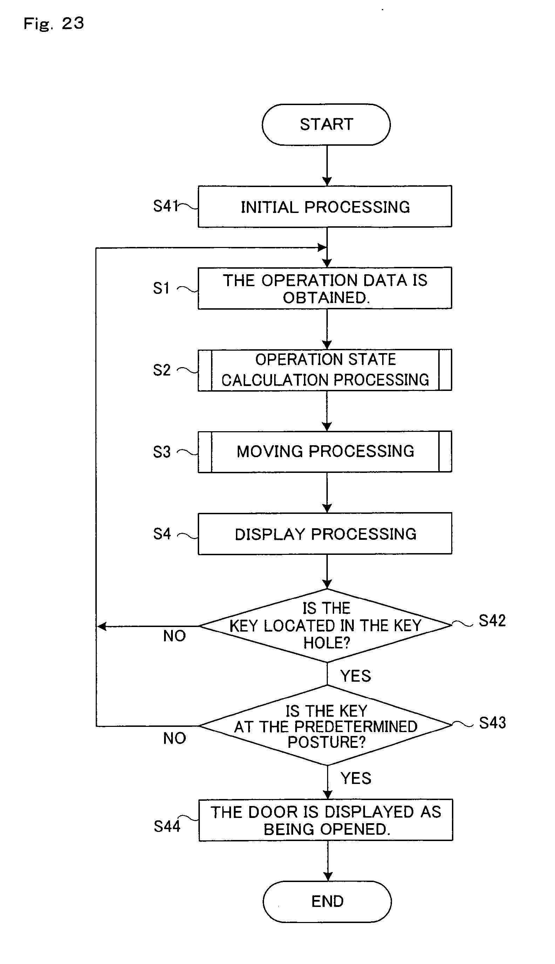

FIG. 23 is a flowchart illustrating a flow of the game processing in the second example. In FIG. 23, substantially the same steps as those in the game processing shown in FIG. 12 bear the same step numbers, and detailed descriptions thereof will be omitted. The processing until the processing in the flowchart shown in FIG. 23 is started is the same as in the case of FIG. 12.

The game processing in the second example is executed as follows. First in step S41, initial processing is executed. In the initial processing, the CPU 10 displays a game screen in an initial state. Namely, a three-dimensional game space is constructed, and the door 75, the key 76 and the like are located. The key 76 is located at a predetermined initial position. Regarding the operation target data 64, data representing the posture of the key 76 in the initial state is stored on the main memory 13 as the posture data 65, and data representing the position of the key 76 in the initial state is stored on the main memory 13 as the position data 66. The CPU 10 generates an image of the game space, in which the door 75 and the key 76 are located, seen from a predetermined virtual camera and displays the game screen on the monitor 2.

After step S41, the processing in step S1 described above is executed, and then the operation state calculation processing in step S2 is executed. The processing in steps S1 and S2 is the substantially same as described above with reference to FIG. 12.

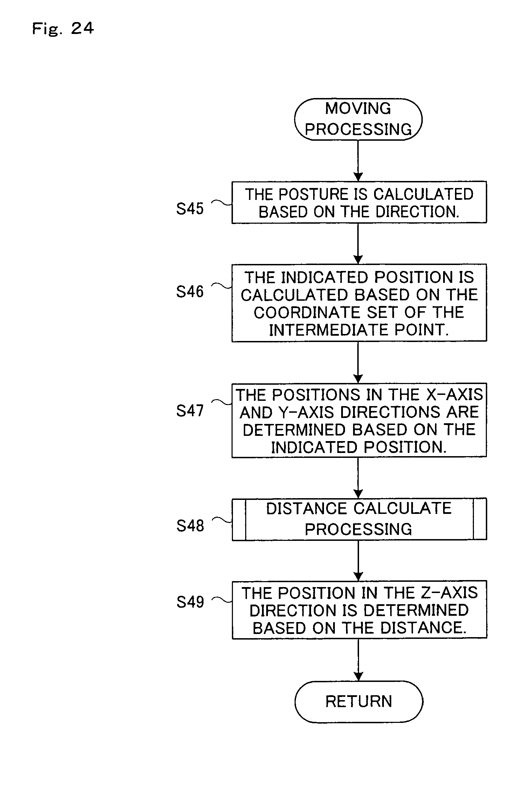

Next, the moving processing in step S3 is executed. FIG. 24 is a flowchart illustrating a detailed flow of the moving processing in the second example. The moving processing in the second example is executed as follows. First in step S45, the posture of the key 76 is calculated in accordance with the direction calculated in step S16. Step S45 corresponds to step S21 described above. In the second example, the key 76 is rotated around the depth direction of the display screen as an axis (around the Z axis) in accordance with the rotation of the controller 7 around the indicated direction. Namely, the rotation direction of the controller 7 is the same as the rotation direction of the key 76 displayed on the display screen. Accordingly, the player can feel as if he/she was actually rotating the key 76 by performing an operation of rotating the controller 7.

Next in steps S46 through S49, the position of the key 76 in the game space is determined. The processing in steps S46 through S49 correspond to step S22 described above.

In step S46, the indicated position on the display screen is calculated based on the intermediate point data 58 in the operation state data 56 stored on the main memory 13. A method for calculating the indicated coordinate set is the same as described above regarding step S22. The above-described function is used. Data on the coordinate set representing the indicated position (indicated coordinate set) is stored on the main memory 13 as the indicated coordinate set data 62.

In step S47, the positions of the key 76 in the X-axis direction and the Y-axis direction in the game space are determined based on the indicated position calculated in step S46. More specifically, the position of the key 76 in the X-axis direction in the game space is determined based on the x component of the coordinate set represented by the indicated coordinate set data 62, and the position of the key 76 in the Y-axis direction in the game space is determined based on the y component of the coordinate set. Accordingly, the direction in which the controller 7 is moved is the same as the direction in which the key 76 is moved on the display screen.

In step S48, processing of calculating the distance from the imaging means to the markers 8a and 8b (distance calculation processing) based on the length calculated in step S19 is executed. Hereinafter, the distance calculation processing will be described in detail.

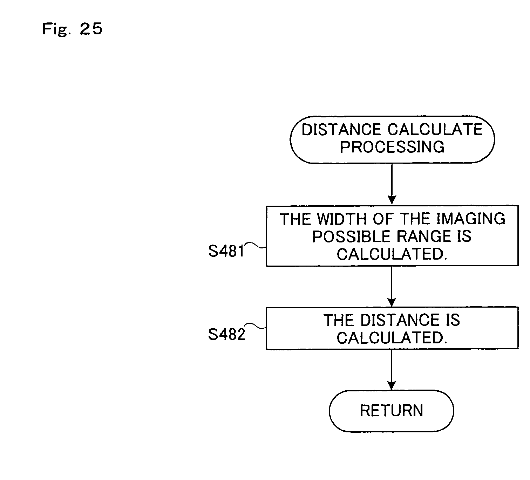

FIG. 25 is a flowchart illustrating a detailed flow of the distance calculation processing in step S48 shown in FIG. 24. FIG. 26A and FIG. 26B illustrate the processing in step S48. FIG. 26A shows an example of a taken image obtained by the controller 7, and FIG. 26B shows the positional relationship between the markers 8a and 8b and the controller 7 when the taken image is obtained. In step S19 described above, a length mi between the two points in the taken image is calculated.

The distance calculation processing is executed as follows. First in step S481, a width w (see FIG. 26B) of an imaging possible range of the imaging element 40 with respect to the positions of the markers 8a and 8b is calculated. Specifically, the CPU 10 calculates the width w from the following equation.

$$w = wi \times m/mi$$

In the above equation, m is the interval between the markers 8a and 8b (for example, 30 cm), which is a fixed value. wi is the width of the taken image obtained by the imaging element 40 which corresponds to the width w. wi is also a fixed value. The interval m and the width wi are both fixed values and therefore are stored on storage means (not shown) in the game apparatus 3 in advance. The interval m may have any value determined by the player in accordance with the environment; i.e., the player can place the markers 8a and 8b at any interval. In this case, the player may input the interval m.

Next in step S482, a distance d between the markers 8a and 8b and the imaging element 40 (the controller 7) is calculated based on the width w and the viewing angle $\theta2$ of the imaging element 40. Specifically, the CPU 10 calculates the distance d from the following equation.

$$\tan(\theta2/2) = (w/2)/d = w/2d$$

The viewing angle $\theta2$ is a fixed value, and therefore is stored on storage means (not shown) in the game apparatus 3 in advance. Data on the distance d calculated by the above equation is stored on the main memory 13 as the distance data 63. After step S482, the CPU 10 terminates the distance calculation processing.

Returning to FIG. 24, in step S49, the position of the key 76 in the Z-axis direction in the game space is determined based on the distance data 63 calculated in step S48. For example, the position of the key 76 in the Z-axis direction is determined such that as the value of the distance represented by the distance data 63 is greater, the key 76 is located forward with respect to the display screen (i.e., closer to the player in front of the display screen of the monitor 2). Accordingly, with respect to the depth direction as well as the up, down, left and right directions of the display screen, the direction in which the controller 7 is moved is the same as the direction in which the key 76 is moved. With such settings, the player can feel as if he/she was actually moving the key 76 by performing an operation of moving the controller 7. Data on the position of the key 76 determined by the processing in steps S46 through S49 is stored on the main memory 13 as the position data 66. After step S49, the CPU 10 terminates the moving processing.

In the case where the position of the key 76 determined in the moving processing in step S3 is beyond the wall or the door 75, the position data 66 of the key 7 6 is not updated and the contents of the position data 66 before the moving processing in step S3 are maintained. Namely, in the case where the key 76 collides against the wall or the door 75, the key 76 is not moved. Unless the key 76 is in a predetermined direction around the Z axis, the key 76 does not pass through the key hole 75a.

In step S4 after step S3, the display processing is executed. Namely, the key 76 is displayed on the display screen with the new position and posture determined in step S3. By repeating the processing in step S4 frame by frame, the key 76 is displayed as moving and rotating in accordance with the movement and the rotation of the controller 7.

Next in step S42, it is determined whether or not the key 76 is located in the key hole 75a. This determination can be performed by referring to the position data 66 in the operation target data 64 stored on the main memory 13 and data representing the position of the key hole 75a (stored on the main memory 13). When it is determined in step S42 that the key 76 is located in the key hole 75a, processing in step S43 is executed. When it is determined in step S42 that the key 76 is not located in the key hole 75a, the processing returns to step S1 and the above-described processing is repeated.

In step S43, it is determined whether or not the key 76 is at a predetermined posture around the Z axis. This determination can be performed by referring to the posture data 65 in the operation target data 64 stored on the main memory 13. When it is determined in step S43 that the key 76 is at the predetermined posture, processing in step S44 is executed. When it is determined in step S43 that the key 76 is not at the predetermined posture, the processing returns to step S1 and the above-described processing is repeated.

In step S44, the door 75 is displayed as being opened on the display screen. The processing after step S44 is not directly relevant to the present invention and thus will not be describedindetail. After this, a player character can move beyond the door 75 or the scene beyond the door 75 is displayed on the display screen. So far, the game processing in the second example has been described.

As described above, in the second example, the direction in which the controller 7 is moved or rotated is matched to the direction in which the operation target is moved or rotated. Thus, the player can feel as if he/she was actually moving or rotating the operation target, which was not possible conventionally.

In the above example, the distance between the imaging target (the markers 8a and 8b) and the imaging means (the imaging element 40) is calculated based on the size of the image in the taken image (the total length of the two target images 8a' and 8b'). In other embodiments, in the case where the strength of the light received by the imaging means is detectable, the distance may be calculated based on the strength of the light from the markers which is received by the imaging means.

(Third Example)

Next, the game processing in a third example will be described. In the third example, a three-dimensional game space is constructed, and a virtual camera for generating an image of the game space is set. In the third example, the virtual camera is the operation target. In this example, processing of moving the virtual camera will be mainly described, and other game processing will be omitted.

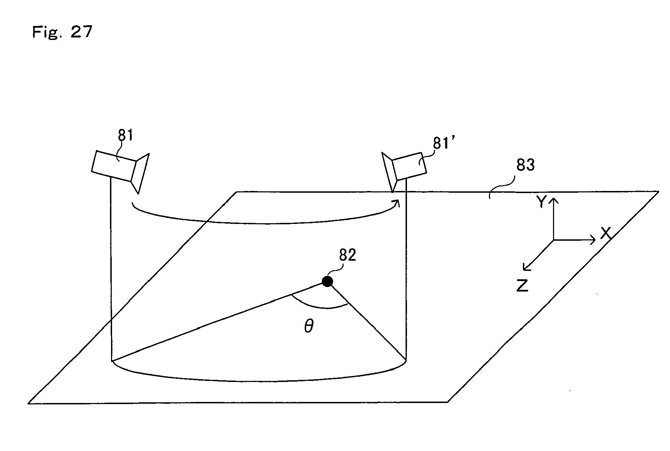

FIG. 27 shows an example of a game space in the third example. FIG. 27 shows a virtual camera 81, as the operation target, rotating or moving on an arc. In FIG. 27, the reference numeral 81 represents a pre-movement position and direction of the virtual camera, and reference numeral 81' represents a post-movement position and direction of the virtual camera. In FIG. 27, a coordinate system representing positions in the game space (X-Y-Z coordinate system) is set. In this coordinate system, a ground 83 is parallel to the X axis and the Z axis, and the Y axis is vertical to the ground 83. The virtual camera 81 moves on an arc around a predetermined point in the game space which is designated by the player in accordance with the rotation operation. Specifically, the virtual camera 81 moves on an arc parallel to the X-Z plane without the Y-axis coordinate thereof being changed. The direction of the virtual camera 81 is controlled such that the point of attention of the virtual camera 81 is not changed even when the virtual camera is moved on an arc. In the third example, the only motion performed by the virtual camera is to move on an arc.

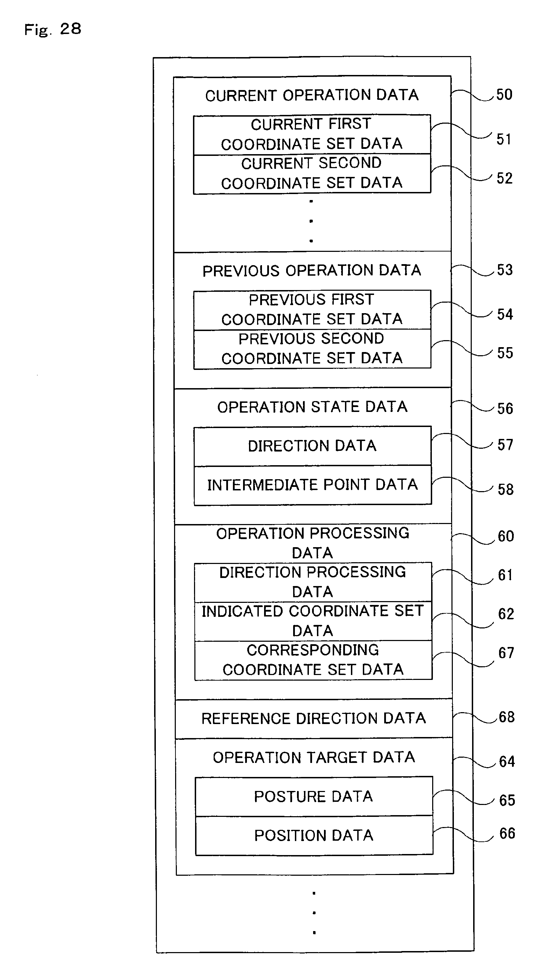

Next, the game processing in the third example will be described in detail. FIG. 28 shows main data stored on the main memory 13 in the third example. The length data 59 in the operation state data 56 shown in FIG. 11 is not necessary for the game processing and is not stored on the main memory 13. The distance data 63 in the operation processing data 60 is not necessary for the game processing and is not stored on the main memory 13. The operation target data 64 shown in FIG. 11 represents a position and a posture of the virtual camera as the operation target. Namely, the posture data 65 represents a posture of the virtual camera, and the position data 66 represents a position of the virtual camera in the game space.

In the third example, corresponding coordinate set data 67 is stored on the main memory 13 in addition to the data shown in FIG. 11. The corresponding coordinate set data 67 represents a three-dimensional coordinate set indicating the position in the game space corresponding to the indicated position. In the third example, reference direction data 68 representing a reference direction is stored on the main memory 13 in addition to the data shown in FIG. 11. The "reference direction" is a direction used as the reference with respect to the direction obtained from the taken image. The reference direction is used when determining a rotation amount of the virtual camera, and the rotation amount of the virtual camera is determined based on an angular difference between the reference direction and the current direction (the direction represented by the direction data 57). In the third example, the reference direction is set by the player at the start of the game.

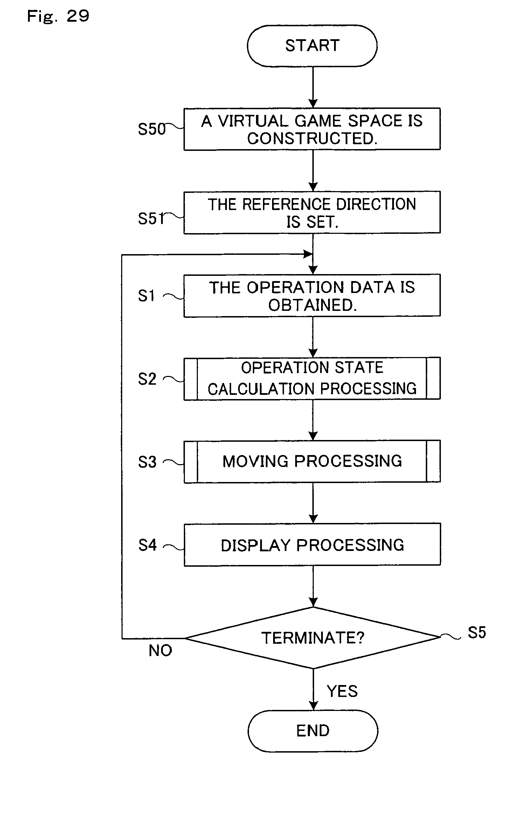

FIG. 29 is a flowchart illustrating a flow of the game processing in the third example. In FIG. 29, substantially the same steps as those in the game processing shown in FIG. 12 bear the same step numbers, and detailed descriptions thereof will be omitted. The processing until the processing in the flowchart shown in FIG. 29 is started is the same as in the case of FIG. 12.

The game processing in the third example is executed as follows. First in step S50, a three-dimensional game space is constructed. Namely, the CPU 10 constructs a three-dimensional game space and locates objects in the game space. The CPU 10 also sets a virtual camera at a predetermined position in the game space with a predetermined viewing direction. The predetermined position and the predetermined viewing direction are determined in advance.

Next in step S51, processing of setting the reference direction is executed. Specifically, the CPU 10 urges the player to perform an operation of setting the reference direction through display or the like. In accordance with this, the player holds the controller 7 with an arbitrary posture with respect to the indicated direction and performs an operation of setting the reference direction (for example, presses the A button). When this operation is performed, the CPU 10 calculates the reference direction based on the taken image obtained when the operation is performed, by substantially the same processing as in step S16. Data representing a vector indicating the calculated reference direction is stored on the main memory 13 as the reference direction data 68. In the third example, such processing in step S51 is executed before the processing of moving the virtual camera (steps S1 through S3).

After step S51, the processing in step S1 described above is executed, and then the operation state calculation processing in step S2 is executed. In the operation state calculation processing in the third example, the processing of calculating the distance between the two coordinate sets (step S19) is not executed. The operation state calculation processing in the third example is substantially the same as described above with reference to FIG. 12 except for step S19.

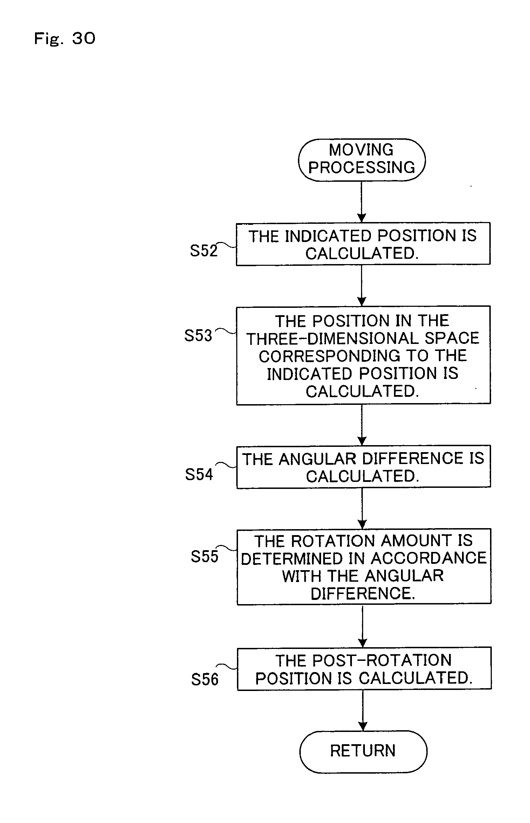

Next, the moving processing in step S3 is executed. FIG. 30 is a flowchart illustrating a detailed flow of the moving processing in the third example. The moving processing in the third example is executed as follows. First in steps S52 and S53, a position of the central point around which the virtual camera moves is determined. First in step S52, the indicated position on the display screen is calculated. A method for calculating the indicated position (indicated coordinate set) is the same as described above regarding steps S46 and S22. Next in step S53, the corresponding coordinate set corresponding to the indicated coordinate set is calculated. In this example, the position of the corresponding coordinate set is the central position around which the virtual camera is moved. Specifically, the position of the corresponding coordinate set may be a three-dimensional position at which a target displayed at the indicated position on the display screen (for example, the ground) exists in the game space, or a three-dimensional position which is set based on the indicated position on the display screen and a predetermined depth direction (the viewing direction of the virtual camera). Data on the corresponding coordinate set calculated in step S53 is stored on the main memory 13 as the corresponding coordinate set data 67. The processing in steps S52 and S53 correspond to step S22 described above.

In steps S54 through S56, processing of rotating the virtual camera in a direction calculated in accordance with the rotation of the controller 7 around the indicated direction (i.e., rotating the virtual camera in the direction calculated in step S16). The processing in steps S54 through S56 corresponds to the processing in step S21 shown in FIG. 2. Hereinafter, specific processing in step S21 in the third example will be described.

First in step S54, the CPU 10 calculates an angle (angular difference) made by the direction calculated in step S16 and the reference direction. Specifically, the CPU 10 calculates an angle made by the vector represented by the reference direction data 67 stored on the main memory 13 and the vector represented by the direction data 57 in the operation state data 56. The obtained angle $\theta'$ is represented in the range of, for example, $-180° < \theta' \leq 180°$. Data on the calculated angular difference is stored on the main memory 13 as the direction processing data 61.

Next in step S55, the CPU 10 determines a rotation amount of the virtual camera (the rotation angle $\theta$ shown in FIG. 27) in accordance with the angle calculated in step S54. For example, the rotation amount of the virtual camera may be the calculated angle, or may be obtained by multiplying the calculated angle by a constant. The virtual camera as the operation target may be set to be rotated only when the angle is a predetermined value or greater. The CPU 10 rotates the virtual camera in a different direction when the calculated angle has a positive value from when the calculated angle has a negative value.

Next in step S56, a post-rotation position and posture of the virtual camera are calculated. Specifically, the CPU 10 calculates a position of the virtual camera after the virtual camera is rotated by the rotation amount determined in step S55 around the central position (the position of the corresponding coordinate set) determined in step S52. As described above, the direction of the virtual camera is controlled such that the point of attention is not changed from before the rotation. Data representing the position of the virtual camera calculated in step S56 is stored on the main memory 13 as the position data 66. Data representing the posture of the virtual camera calculated in step S56 is stored on the main memory 13 as the posture data 65. After step S56, the CPU 10 terminates the moving processing.

In step S4, the display processing is executed using the position and the posture (the viewing direction) of the virtual camera which has been moved in step S3. Namely, an image of the game space seen from the post-movement virtual camera is generated, and the generated image is displayed on the display screen. The processing in step S5 is substantially the same as described above with reference to FIG. 12.

As described above, in the third example, the operation target may be rotated using the direction obtained from the taken image (the direction calculated in step S16) or may be rotated using the angular difference between the direction obtained from the taken image and the reference direction. The center of the rotation may be designated by the player by performing the position designation operation. In other embodiments, the point of attention of the virtual camera may be the center of the rotation. The direction of the virtual camera may be moved such that the corresponding coordinate set corresponding to the indicated coordinate set is the point of attention, in which case the virtual camera is moved on an arc around the point of attention as the center of rotation while the point of attention is fixed. In this case, both the point of attention and the direction of the virtual camera can be simultaneously set. Alternatively, only the posture (direction) of the virtual camera may be changed in accordance with the angular difference without changing the position of the virtual camera.

In the third example, the virtual camera is rotated based on the angular difference. Even in the case where an object appearing in the game space is the operation target, the object can be rotated based on the angular difference. For example, the objects described in the first and second examples (the player object 71 and the key 76) may be rotated based on the angular difference. The virtual camera may be rotated based on a calculation using the direction obtained from the taken image itself, instead of the angular difference.

In other embodiments, an object appearing in the game space may be set as the operation target and translated to the position of the corresponding coordinate set and rotated in the direction represented by the direction data 57.

In the third example, the difference between the direction represented by the direction data 57 and the reference direction is calculated as the angular difference. Alternatively, the difference between the vector represented by the direction data 57 and the vector representing the reference direction may be calculated as a vector. The value of a predetermined component of the calculated vector may be used instead of the angular difference. Thus, the processing cost of calculating the angular difference can be alleviated while allowing controls to be performed based on the inclination of the controller 7.

(Fourth Example)

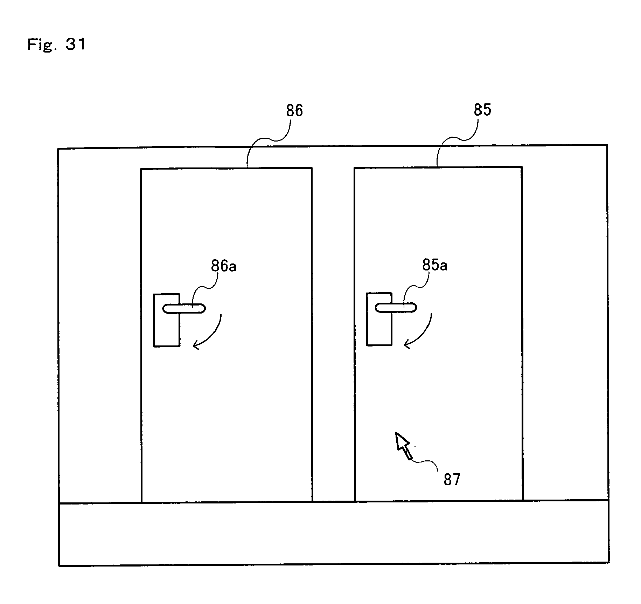

FIG. 31 shows an example of a game screen in a fourth example. FIG. 31 shows a game scene in which the player can open the door in the game space. In FIG. 31, a three-dimensional game space is constructed, and two doors 85 and 86 are located in the game space. The door 85 has a door knob 85a, and the door 86 has a door knob 86a. In this example, the two door knobs 85a and 86a are objects, each of which can be an operation target.

On the display screen, a cursor 87 movable by the player is displayed. The player operates the controller 7 to move the cursor 87. The cursor 87 is displayed at the indicated position. The player can use the cursor 87 to designate the object to be set as the operation target (the door knob 85a or 86a). In this example, the object designated by the cursor 87 can be the operation target of the rotation operation.

Next, the game processing in the fourth example will be described in detail. In the fourth example, the operation target data 64 is not stored at the start of the game. The door knobs which can be the operation target is only rotatable and does not move, and therefore the operation target data 64 does not include the position data 66 in the fourth example. In this example, the length data 59 in the operation state data 56 shown in FIG. 11 is not necessary for the game processing and is not stored on the main memory 13. The direction processing data 61 and the distance data 63 in the operation processing data 60 shown in FIG. 11 are not necessary for the game processing and are not stored on the main memory 13.

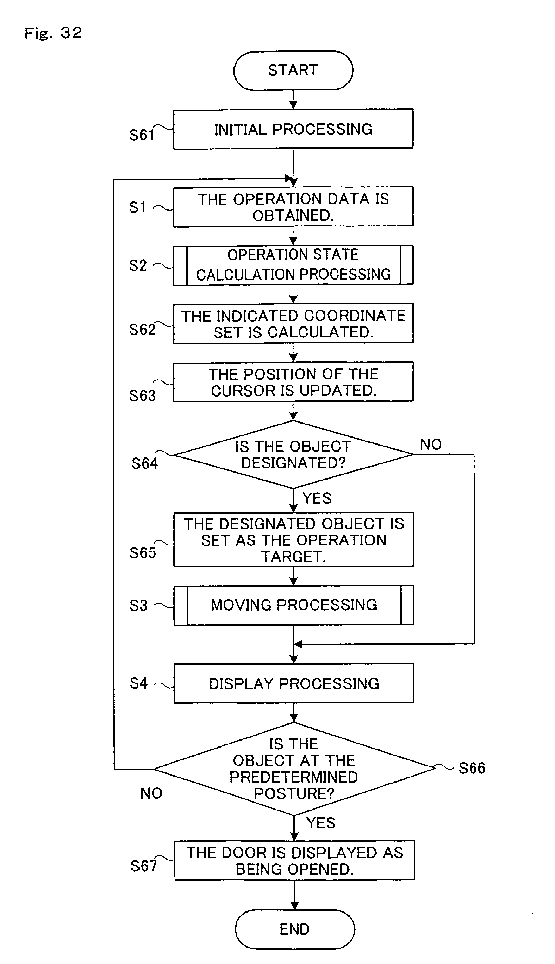

FIG. 32 is a flowchart illustrating a flow of the game processing in the fourth example. In FIG. 32, substantially the same steps as those in the game processing shown in FIG. 12 bear the same step numbers, and detailed descriptions thereof will be omitted. The processing until the processing in the flowchart shown in FIG. 32 is started is the same as in the case of FIG. 12.

The game processing in the fourth example is executed as follows. First in step S61, initial processing is executed. In the initial processing, the CPU 10 displays a game screen in an initial state. Namely, a three-dimensional game space is constructed, and the doors 85 and 86 and the like are located. The cursor 87 is displayed at a predetermined position on the display screen.

After step S61, the processing in step S1 described above is executed, and then the operation state calculation processing in step S2 is executed. In the operation state calculation processing in the fourth example, the processing of calculating the distance between the two coordinate sets (step S19) is not executed. The operation state calculation processing in the fourth example is substantially the same as described above with reference to FIG. 12 except for step S19.

In the fourth example, after step S2, processing in step S62 is executed. In the step S62, the indicated position is calculated. The processing in step S62 is substantially the same as in step S46. Data on the coordinate set representing the indicated position (indicated coordinate set) is stored on the main memory 13 as the indicated coordinate set data 62. Next in step S63, the position of the cursor 87 is updated in accordance with the indicated coordinate set. The position of the cursor 87 is determined as the position of the indicated coordinate set.

In step S64, it is determined whether or not the cursor 87, the position of which was updated in step S63, designates an object which can be the operation target (the door knob 85a or 86a). Namely, it is determined whether or not the position indicated by the cursor 87 is a display position of the door knob 85a or 86a (i.e., whether or not the cursor 87 is in a predetermined range from the display position of the door knob 85a or 86a). When it is determined in step S64 that the cursor 87 designates an obj ect, processing in step S65 is executed. When it is determined in step S64 that the cursor 87 does not designate an object, the processing in steps S65 and S3 is skipped and the processing in step S4 is executed.

In step S65, the object which is determined to be designated by the cursor 87 in step S64 is set as the operation target. Specifically, data representing a posture of such an object is stored on the main memory 13 as the posture data 65 in the operation target data 64.

In step S3, the moving processing is executed. In the moving processing in the fourth example, as described above, the processing of rotating the operation target (step S21) in a direction calculated in accordance with the rotation of the controller 7 around the indicated direction as an axis (around the direction calculated in step S16) is executed. In the fourth example, the operation target is the object, the posture of which is stored on the main memory 13 as the operation target data 64, i.e., the door knob designated by the cursor 87.

In step S4, the display processing is executed. Specifically, the cursor 87 is displayed at the position updated instepS63. In the case where the processing in step S3 is executed, the door knob 85a or 86a is displayed as being rotated. Next in step S66, it is determined whether or not either the door knob 85a or 86a assumes a predetermined posture. This determination is substantially the same as the processing in step S43 in the second example. When it is determined in step S66 that either the door knob 85a or 86a assumes the predetermined posture, processing in step S67 is executed. When it is determined in step S66 that neither the door knob 85a nor the door knob 86a assumes the predetermined posture, the processing returns to step S1 and the above-described processing is repeated. In step S67, the door having the door knob assuming the predetermined posture is displayed on the display screen as being opened.

As described above, in the fourth example, the operation target which is to be rotated by the player is not limited to a predetermined obj ect and may be an obj ect designated by the player. Alternatively, an object as the operation target may be designated using the indicated position by the controller 7.

In the fourth example, a position on the display screen is designated by the controller 7 to move the cursor to the position, and thus the door knob as the operation target is selected. In other embodiments, any method is usable for designating the position on the display screen. For example, the cursor may be moved by a cross key provided on the controller 7.

In the fourth example, the cursor 87 is set on the display screen and moves on the two-dimensional plane of the display screen. In other embodiments, the cursor 87 may be movable in a three-dimensional game space. The cursor 87 may be moved in the three-dimensional game space in, for example, the same manner as with the virtual camera in the third example. The door knob may be set to be rotatable only when the position of the cursor 87 in the Z-axis direction matches the position of the door knob in the Z-axis direction (or when the distance between the two positions is within a predetermined distance). In this case, the CPU 10 determines whether or not there is any object (door knob) which can be the operation target at the Z-axis direction position of the coordinate set of the cursor 87. When it is determined that there is an object, the object is set as the operation target.

(Other Examples)

The present invention is usable to various games other than those described above. For example, the present invention is applicable to a racing game. Specifically, the racing car operated by the player is set as the operation target, and the direction of the racing car seen from the above is changed by rotating the racing car in accordance with the rotation of the controller 7 around the indicated direction as an axis. Namely, the driving direction of the racing car is changed. Thus, the racing car rotates as shown in FIG. 17A or FIG. 17C. The player can change the driving direction of the racing car by rotating the controller 7 as if he/she was turning the steering wheel of an actual automobile. The player can intuitively operate the racing car.

In the above description, the information processing system and the program according to the present invention are realized as a game system and a game program. The present invention is not limited to uses in the game field, and is applicable to any information processing system using an input device for determining the position or direction of the input device itself using a taken image.

The present invention provides a novel operation of an information processing system using an input device which is used by the user while being held in his/her hand, and is applicable to a game apparatus or a game program, for example.

While the invention has been described in detail, the foregoing description is in all aspects illustrative and not restrictive. It is understood that numerous other modifications and variations can be devised without departing from the scope of the invention.

Although the invention can be defined as stated in the attached embodiments, it is to be understood that the present invention can alternatively also be defined as stated in the following embodiments:

1. A computer readable storage medium having stored thereon an information processing program executable by a computer of an information processing apparatus for receiving operation data from an operation device including imaging means for taking an image of an imaging target and for displaying, on a display device, a virtual space obtained by performing calculation processing on a predetermined operation target using the operation data, the information processing program causing the computer to execute: an obtaining step(S1) of obtaining a taken image taken by the imaging means of the operation device as the operation data; a vector calculation step(S16) of calculating a two-dimensional vector using a position of the imaging target in the taken image; a first rotation step(S3) of rotating the operation target in accordance with a calculated value of the two-dimensional vector; and a display step(S4) of displaying the virtual space, changed in accordance with the rotation of the operation target in the first rotation step, on a display area of the display device.

2. A storage medium according to embodiment 1, wherein the vector calculation step includes: a first calculation step of calculating coordinate sets of two predetermined points in the image of the imaging target in a coordinate system corresponding to the taken image; and a second calculation step of calculating the two-dimensional vector connecting the coordinate sets of the two predetermined points.

3. A computer readable storage medium having stored thereon an information processing program executable by a computer of an information processing apparatus for receiving operation data from an operation device, which includes imaging means for taking an image of an imaging target and first calculation means for calculating coordinate sets of two predetermined points in the image of the imaging target included in a taken image taken by the imaging means, and for displaying, on a display device, a virtual space obtained by performing calculation processing on a predetermined operation target using the operation data, the information processing program causing the computer to execute: an obtaining step (S1) of obtaining the coordinate sets of the two predetermined points as the operation data; a vector calculation step(S16) of calculating a two-dimensional vector connecting the coordinate sets of the two predetermined points; a first rotation step(S3) of rotating the operation target in accordance with a calculated value of the two-dimensional vector; and a display step(S4) of displaying the virtual space, changed in accordance with the rotation of the operation target in the first rotation step, on a display area of the display device.

4. A computer readable storage medium having stored thereon an information processing program executable by a computer of an information processing apparatus for receiving operation data from an operation device, which includes imaging means for taking an image of an imaging target and vector calculation means for calculating a two-dimensional vector using a position of the imaging target in a taken image taken by the imaging means, and for displaying, on a display device, a virtual space obtained by performing calculation processing on a predetermined operation targetusingthe operation data,theinformation processing program causing the computer to execute: an obtaining step (S1) of obtaining the two-dimensional vector as the operation data; a first rotation step(S3) of rotating the operation target in accordance with an obtained value of the two-dimensional vector; and a display step(S4) of displaying the virtual space, changed in accordance with the rotation of the operation target in the first rotation step, on a display area of the display device.

5. A storage medium according to embodiment 1, wherein: the information processing program further causes the computer to execute an indicated coordinate set calculation step(S22;S52;S62) of calculating a predetermined indicated coordinate set which corresponds to a position on the display area, in correspondence with a position of the image of the imaging target in the taken image obtained in the obtaining step; and the first rotation step rotates the operation target by a calculation using the two-dimensional vector and the indicated coordinate set.

6. A storage medium according to embodiment 2 or 3, wherein: the information processing program further causes the computer to execute an indicated coordinate set calculation step(S22;S52;S62) of calculating a predetermined indicated coordinate set which corresponds to a position on the display area, in correspondence with a coordinate set of an intermediate point between the two predetermined points; and the first rotation step rotates the operation target by a calculation using the two-dimensional vector and the indicated coordinate set.

7. A storage medium according to embodiment 4, wherein: the operation data further includes a coordinate set of one point corresponding to a position of the image of the imaging target; the information processing program further causes the computer to execute an indicated coordinate set calculation step(S22;S52;S62) of calculating a predetermined indicated coordinate set which corresponds to a position on the display area, in correspondence with the coordinate set of the one point; and the first rotation step rotates the operation target by a calculation using the two-dimensional vector and the indicated coordinate set.

8. A storage medium according to any of embodiments 5 to 7,whereintheindicated coordinatesetcalculationstep calculates the indicated coordinate set which corresponds to the position on the display area, in correspondence with a position of the image of the imaging target in the case where the image taken by the imaging means is rotated around the center of the image as an axis and the two-dimensional vector is directed in one certain direction by the rotation.

9. A storage medium according to any of embodiments 1 to 4, wherein: the information processing program further causes the computer to execute an indicated coordinate set calculation step (S22;S52;S62) of setting a predetermined indicated coordinate set which corresponds to a position on the display area as an indicated coordinate set; and the first rotation step rotates the operation target by a calculation using the two-dimensional vector and the indicated coordinate set.

10. A storage medium according to any of embodiments 5 to 9, wherein: the virtual space is a virtual three-dimensional space; the information processing program further causes the computer to execute a three-dimensional indicated coordinate set setting step(S53) of calculating a three-dimensional coordinate set in the virtual space which corresponds to the indicated coordinate set calculated in the indicated coordinate set calculation step and setting the three-dimensional coordinate set as a three-dimensional indicated coordinate set; and the first rotation step rotates the operation target in the three-dimensional space by a calculation using the two-dimensional vector and the three-dimensional indicated coordinate set.

11. A storage medium according to any of embodiments 1 to 4, wherein: the information processing program further causes the computer to execute an object location step(S31;S41;S60) of locating at least one object in the virtual space; and the first rotation step rotates any one of the at least one object located in the virtual space as the operation target.

12. A storage medium according to any of embodiments 5 to 9, wherein: the information processing program further causes the computer to execute an object location step(531;S41 ;S60) of locating at least one object in the virtual space; and the first rotation step includes: a determination step(S64) of determining whether or not any one of the at least one object is displayed at the position on the display area which corresponds to the indicated coordinate set; an operation target setting step (S65) of, when it is determined that one of the at least one object is displayed at the position which corresponds to the indicated coordinate set, setting the one object as the operation target; and a step(S21) of rotating the one object which is set in the operation target setting step.

13. A storage medium according to any of embodiments 5 to 9, wherein: the information processing program further causes the computer to execute an object location step (S31;S41;S60) of locating an object as the operation target in the virtual space; and the first rotation step includes: an object moving step(S21) of moving the object so as to be displayed at a position of the indicted coordinate set calculated in the indicated coordinate set calculation step; and a step(S22) of rotating the object.

14. A storage medium according to embodiment 10, wherein: the information processing program further causes the computer to execute an object location step(S31;S41;S60) of locating an object as the operation target in the virtual space; and the first rotation step includes: an object moving step(S21) of moving the object to the three-dimensional coordinate set calculated in the three-dimensional indicated coordinate set setting step; and a step (S22) of rotating the object.

15. A storage medium according to any of embodiments 5 to 9, wherein: the information processing program further causes the computer to execute an object location step (S31;S41;S60) of locating an object as the operation target in the virtual space; and the first rotation step includes: a central coordinate set setting step(S52) of setting the indicated coordinate set calculated in the indicated coordinate set calculation step as a central coordinate set of rotation; and a step(S22) of rotating the object around the central coordinate set as the center of rotation.

16. A storage medium according to embodiment 10, wherein: the information processing program further causes the computer to execute an object location step (S31;S41;S60) of locating an object as the operation target in the virtual space; and the first rotation step includes: a central coordinate set setting step(S53) of setting the three-dimensional coordinate set calculated in the three-dimensional indicated coordinate set setting step as a central coordinate set of rotation; and a step (S22) of rotating the object in the three-dimensional space around the central coordinate set as the center of rotation.

17. A storage medium according to any of embodiments 1 to 4, wherein: the virtual space is a virtual three-dimensional space; the information processing program further causes the computer to execute a virtual camera setting step (S50) of setting a virtual camera directed in a predetermined direction at a predetermined position in the virtual space; the first rotation step rotates the virtual camera as the operation target; and the display step displays an image of the virtual space seen from the virtual camera on the display area.

18. A storage medium according to embodiment 10, wherein: the virtual space is a virtual three-dimensional space; the information processing program further causes the computer to execute a virtual camera setting step (S50) of setting a virtual camera directed in a predetermined direction at a predetermined position in the virtual space; and the first rotation step rotates the virtual camera as the operation target around the three-dimensional coordinate set calculated in the three-dimensional indicated coordinate set setting step as the center of rotation.

19. A storage medium according to embodiment 17, wherein the first rotation step rotates the virtual camera around a position of a point of attention of the virtual camera as the center of rotation.

20. A storage medium according to embodiment 17, wherein the first rotation step rotates the virtual camera such that a viewing direction of the virtual camera changes.

21. A storage medium according to any of embodiments 1 to 4, wherein the first rotation step changes a posture of the operation target by the rotation.

22. A storage medium according to any of embodiments 1 to 4, wherein the first rotation step moves a position of the operation target by rotating the operation target around a predetermined position as the center of rotation.

23. A storage medium according to embodiment 21 or 22, wherein the first rotation step determines the posture or the position of the operation target in accordance with a calculated direction of the two-dimensional vector.

24. A storage medium according to any of embodiments 1 to 4, wherein the first rotation step includes: a determination step of determining whether or not a direction of the two-dimensional vector has exceeded a predetermined range; and a step of, when it is determined in the determination step that the direction of the two-dimensional vector has exceeded the predetermined range, rotating the operation target.

25. A storage medium according to any of embodiments 1 to 4, wherein: the information processing program further causes the computer to execute an inclination calculation step (S54) of obtaining a difference between a direction of the two-dimensional vector and a predetermined reference direction as an angle or a vector; and the first rotation step rotates the operation target in accordance with the difference calculated in the inclination calculation step.

26. A storage medium according to embodiment 25, wherein the first rotation step includes: a rotation amount setting step (S55) of setting a rotation amount in accordance with a magnitude of the difference calculated in the inclination calculation step; and a step(S56) of rotating the operation target by the rotation amount.

27. A storage medium according to embodiment 25, wherein the first rotation step includes: a determination step of determining whether or not the difference calculated in the inclination calculation step has exceeded a predetermined value; and a step of, when it is determined in the determination step that the difference has exceeded the predetermined value, rotating the operation target.

28. A storage medium according to embodiment 1, wherein: the information processing program further causes the computer to execute a size calculation step(S19) of calculating data representing a size of the image of the imaging target in the taken image obtained in the obtaining step from the operation data; and the first rotation step rotates the operation target by a calculation using the two-dimensional vector and the data calculated in the size calculation step.

29. A storage medium according to embodiment 2 or 3, wherein: the information processing program further causes the computer to execute a length calculation step(S19) of calculating data representing a length of a distance between the coordinate sets of the two predetermined points; and the first rotation step rotates the operation target by a calculation using the two-dimensional vector and the data calculated in the length calculation step.

30. A storage medium according to embodiment 4, wherein: the operation data further includes data representing a length of a distance between the coordinate sets of the two predetermined points in the image of the imaging target included in the taken image taken by the imaging means; and the first rotation step rotates the operation target by a calculation using the two-dimensional vector and the data representing the length of the distance between the coordinate sets of the two predetermined points.

31. A storage medium according to embodiment 28, wherein the first rotation step includes: a step(S48) of calculating distance data representing a distance between the imaging means and the imaging target from the data calculated in the size calculation step; and a step of rotating the operation target by a calculation using the two-dimensional vector and the distance data.

32. A storage medium according to embodiment 29, wherein the first rotation step includes: a step (S48) of calculating distance data representing a distance between the imaging means and the imaging target from the data calculated in the length calculation step; and a step of rotating the operation target by a calculation using the two-dimensional vector and the distance data.

33. A storage medium according to embodiment 30, wherein the first rotation step includes: a step(S48) of calculating distance data representing a distance between the imaging means and the imaging target from the data representing the length of the distance between the coordinate sets of the two predetermined points; and a step of rotating the operation target by a calculation using the two-dimensional vector and the distance data.

34. A storage medium according to embodiment 28, wherein: the operation data further includes distance data representing a distance between the imaging means and the imaging target; and the first rotation step rotates the operation target by a calculation using the two-dimensional vector and the distance data.

35. A storage medium according to any of embodiments 1 to 4, wherein: the information processing program further causes the computer to execute a distance calculation step (S48) of calculating data corresponding to a distance between the imaging means and the imaging target; and the first rotation step rotates the operation target by a calculation using the two-dimensional vector and the data calculated in the distance calculation step.

36. A storage medium according to any of embodiments 31 to 34, wherein: the virtual space is a virtual three-dimensional space; the information processing program further causes the computer to execute an object location step of locating at least one object in the virtual space; and the first rotation step includes: a depth setting step of determining a coordinate in a depth direction of the virtual space in correspondence with the distance data; a determination step of determining whether or not there is any one of the at least one object at a position of the coordinate in the depth direction calculated in the depth setting step; and an operation target setting step of, when it is determined in the determination step that there is one of the at least one object, setting the one object as the operation target.

37. A storage medium according to any of embodiments 31 to 34, wherein: the virtual space is a virtual three-dimensional space; and the first rotation step includes: a depth setting step(S49) of determining a coordinate in a depth direction of the virtual space in correspondence with the distance data; a moving step of moving a position of the operation target in the depth direction to the coordinate in the depth direction calculated in the depth setting step; and a step of rotating the operation target in accordance with the two-dimensional vector.

38. A storage medium according to any of embodiments 1 to 4, wherein: the operation device comprises inclination determining means for determining an inclination of the operation device; and the information processing program further causes the computer to execute: a determination step of determining whether or not a two-dimensional vector can be calculated from the taken image in the vector calculation step; and a second rotation step of, when it is determined in the determination step that the two-dimensional vector cannot be calculated, rotating the operation target in accordance with the inclination determined by the inclination determining means.

**Claims**

1. A computer readable storage medium having stored thereon an information processing program executable by a computer of an information processing apparatus for receiving operation data from an operation device including imaging means for taking an image of an imaging target, and for displaying, on a display device, a virtual space obtained by performing calculating processing on a predetermined operation target using the operation data, the information processing program causing the computer to execute:

an obtaining step (S1) of obtaining a taken image taken by the imaging means of the operation device as the operation data;

a vector calculation step (S16) of calculating a two-dimensional vector using a position of the imaging target in the taken image;

an inclination calculation step (S54) of obtaining a difference between a direction of the two-dimensional vector and a predetermined reference direction as an angle or a vector;

a first rotation step (S3) of rotating the operation target in accordance with the difference calculated in the inclination calculation step; and a display step (S4) of displaying the virtual space, changed in accordance with the rotation of the operation target in the first rotation step, on a display area of the display device.

2. The storage medium according to claim 1, wherein the first rotation step includes:

a rotation amount setting step (S55) of setting a rotation amount in accordance with a magnitude of the difference calculated in the inclination calculation step; and

a step (S56) of rotating the operation target by the rotation amount.

3. The storage medium according to claim 1, wherein the first rotation step includes:

a determination step of determining whether or not the difference calculated in the inclination calculation step has exceeded a predetermined value; and

a step of, when it is determined in the determination step that the difference has exceeded the predetermined value, rotating the operation target.

4. The storage medium according to any one of claims 1 to 3, wherein:

the virtual space is a virtual three-dimensional space;

the information processing program further causes the computer to execute a virtual camera setting step (S50) of setting a virtual camera directed in a predetermined direction at a predetermined position in the virtual space;

the first rotation step rotates the virtual camera as the operation target; and the display step displays an image of the virtual space seen from the virtual camera on the display area.

5. The storage medium according to claim 4, wherein:

the information processing program further causes the computer to execute:

an indicated coordinate set calculation step (S22; S52; S62) of calculating a predetermined indicated coordinate set which corresponds to a position on the display area of the display device, in correspondence with the position of the imaging target in the taken image; and

a three-dimensional indicated coordinate set setting step (S53) of calculating a three-dimensional coordinate set in the virtual space which corresponds to the indicated coordinate set calculated in the indicated coordinate set calculation step, and setting the three-dimensional coordinate set as a three-dimensional indicated coordinate set; and the first rotation step rotates the virtual camera as the operation target around the three-dimensional indicated coordinate set setting step as the center of rotation.

6. The storage medium according to claim 4, wherein the first rotation step rotates the virtual camera around a position of a point of attention of the virtual camera as the center of rotation.

7. The storage medium according to claim 4, wherein the first rotation step rotates the virtual camera such that a viewing direction of the virtual camera changes.

8. The storage medium according to any one of claims 1 to 3, wherein the first rotation step moves a position of the operation target by rotating the operation target around a predetermined position as the center of rotation.

9. The storage medium according to claim 8, wherein:

the information processing program further causes the computer to execute:

an object location step (S31; S41; S60) of locating an object as the operation target in the virtual space; and

an indicated coordinate set calculation step (S22; S52; S62) of calculating a predetermined indicated coordinate set which corresponds to a position on the display area of the display device, in correspondence with the position of the imaging target in the taken image; and

the first rotation step includes:

a central coordinate set setting step (S52) of setting the indicated coordinate set calculated in the indicated coordinate set calculation step as a central coordinate set of rotation; and

a step (S22) of rotating the object around the central coordinate set as the center of rotation.

10. The storage medium according to claim 8, wherein:

the information processing program further causes the computer to execute:

an object location step (S31; S41; S60) of locating an object as the operation target in the virtual space;

an indicated coordinate set calculation step (S22; S52; S62) of calculating a predetermined indicated coordinate set which corresponds to a position on the display area of the display device, in correspondence with the position of the imaging target in the taken image; and

a three-dimensional indicated coordinate set setting step (S53) of calculating a three-dimensional coordinate set in the virtual space which corresponds to the indicated coordinate set calculated in the indicated coordinate set calculation step, and setting the three-dimensional coordinate set as a three-dimensional indicated coordinate set; and

the first rotation step includes:

a central coordinate set setting step (S53) of setting the three-dimensional coordinate set calculated in the three-dimensional indicated coordinate set setting step as a central coordinate set of rotation; and a step (S22) of rotating the object in the three-dimensional space around the central coordinate set as the center of rotation.

11. An information processing apparatus for receiving operation data from an operation device including imaging means for taking an image of an imaging target, and for displaying, on a display device, a virtual space obtained by performing calculation processing on a predetermined operation target using the operation data, the information processing apparatus comprising:

obtaining means for obtaining a taken image taken by the imaging means of the operation device as the operation data;

vector calculation means for calculating a two-dimensional vector using a position of the imaging target in the taken image;

inclination calculation means for obtaining a difference between a direction of the two-dimensional vector and a predetermined reference direction as an angle or a vector;

first rotation means for rotating the operation target in accordance with the difference calculated in the inclination calculation step; and display means for displaying the virtual space, changed in accordance with the rotation of the operation target in the first rotation means, on a display area of the display device.

12. The information processing apparatus according to claim 11, wherein the first rotation means includes:

rotation amount setting means for setting a rotation amount in accordance with a magnitude of the difference calculated in the inclination calculation means; and

means for rotating the operation target by the rotation amount.

13. The information processing apparatus according to claim 11, wherein the first rotation means includes:

determination means for determining whether or not the difference calculated in the inclination calculation means has exceeded a predetermined value; and

means for, when it is determined in the determination means that the difference has exceeded the predetermined value, rotating the operation target.

EP 2 080 543 A2

Fig. 1

8a          8b

2

1

4

6

5

3

7

36

Fig. 2

Fig. 3A

Fig. 3B

Fig. 4

X ← ⊙ Z
      |
      ↓
      Y

35a

Fig. 5A

Fig. 5B

Fig. 6

Fig. 7

Fig. 8

Fig. 9

Fig. 10

| | STATE OF THE CONTROLLER | TAKEN IMAGE |
|---|---|---|
| STATE A | | |
| STATE B | | |
| STATE C | | |
| STATE D | | |

Fig. 11

CURRENT OPERATION DATA ~ 50

CURRENT FIRST COORDINATE
SET DATA ~ 51

CURRENT SECOND COORDINATE
SET DATA ~ 52

.
.
.

PREVIOUS OPERATION DATA ~ 53

PREVIOUS FIRST COORDINATE
SET DATA ~ 54

PREVIOUS SECOND
COORDINATE SET DATA ~ 55

OPERATION STATE DATA ~ 56

DIRECTION DATA ~ 57

INTERMEDIATE POINT DATA ~ 58

LENGTH DATA ~ 59

OPERATION PROCESSING DATA ~ 60

DIRECTION PROCESSING DATA ~ 61

INDICATED COORDINATE SET
DATA ~ 62

DISTANCE DATA ~ 63

OPERATION TARGET DATA ~ 64

POSTURE DATA ~ 65

POSITION DATA ~ 66

.
.
.

Fig. 12

START

S1 — THE OPERATION DATA IS OBTAINED.

S2 — OPERATION STATE CALCULATION PROCESSING

S3 — MOVING PROCESSING

S4 — DISPLAY PROCESSING

TERMINATE? — S5

NO

YES

END

Fig. 13

```
        ┌─────────────────────────┐
        │    OPERATION STATE      │
        │ CALCULATION PROCESSING  │
        └─────────────────────────┘
                    │
                    ▼
```

S11 — HAVE THE IMAGES OF TWO MARKERS BEEN TAKEN?  → NO → THE OPERATION DATA IS CLEARED. S12

YES

S13 — WERE THE FIRST AND SECOND COORDINATE SET DATA DETECTED In THE PREVIOUS FRAME? → YES → THE FIRST COORDINATE SET IS DETERMINED IN ACCORDANCE WITH THE PREDETERMINED CONDITION. S15

NO

S14 — THE COORDINATE SET CLOSER TO THE PREVIOUS FIRST COORDINATE SET IS DETERMINED AS THE FIRST COORDINATE SET.

S16 — THE DIRECTION FROM THE FIRST COORDINATE SET TO THE SECOND COORDINATE SET IS CALCULATED.

S17 — THE POSITION OF THE INTERMEDIATE POINT IS CALCULATED.

S18 — THE POSITION OF THE INTERMEDIATE POINT IS CORRECTED.

S19 — THE LENGTH OF THE DISTANCE BETWEEN THE TWO COORDINATE SETS IS CALCULATED.

RETURN

Fig. 14

Fig. 15

| | STATE OF THE CONTROLLER | TAKEN IMAGE |
|---|---|---|
| STATE A | | |
| STATE B | | |

Fig. 16

```
        ╭─────────────╮
        │   MOVING    │
        │ PROCESSING  │
        ╰─────────────╯
              │
              ▼
     ┌─────────────────────────┐
S21  │ THE OPERATION TARGET IS │
     │        ROTATED.         │
     └─────────────────────────┘
              │
              ▼
     ┌─────────────────────────┐
     │   THE POSITION OF THE   │
S22  │  OPERATION TARGET IS    │
     │      CALCULATED.        │
     └─────────────────────────┘
              │
              ▼
        ╭─────────────╮
        │   RETURN    │
        ╰─────────────╯
```

Fig. 17A

Fig. 17B

Fig. 17C

Fig. 18A

Fig. 18B

Fig. 19

Fig. 20

| | STATE OF THE CONTROLLER | TAKEN IMAGE | POSTURE OF THE OBJECT |
|---|---|---|---|
| STATE A | | | |
| STATE B | | | |
| STATE C | | | |

Fig. 21

```
                    ┌─────────────┐
                    │    START    │
                    └──────┬──────┘
                           │
                           ▼
S31 ┌──────────────────────────────────────┐
    │          INITIAL PROCESSING            │
    └────────────────────┬───────────────────┘
    ┌──────────────────▶ │
    │                    ▼
S1  │  ┌──────────────────────────────────────┐
    │  │        THE OPERATION DATA IS          │
    │  │            OBTAINED.                   │
    │  └────────────────┬─────────────────────┘
    │                   ▼
S2  │  ┌──────────────────────────────────────┐
    │  ║        OPERATION STATE               ║
    │  ║     CALCULATION PROCESSING           ║
    │  └────────────────┬─────────────────────┘
    │                   ▼
S3  │  ┌──────────────────────────────────────┐
    │  ║        MOVING PROCESSING             ║
    │  └────────────────┬─────────────────────┘
    │                   ▼
S32 │  ┌──────────────────────────────────────┐
    │  │      THE OPPONENT OBJECT IS           │
    │  │           MOVED.                      │
    │  └────────────────┬─────────────────────┘
    │                   ▼
S33 │  ┌──────────────────────────────────────┐
    │  │         THE BALL IS MOVED.            │
    │  └────────────────┬─────────────────────┘
    │                   ▼
S4  │  ┌──────────────────────────────────────┐
    │  │         DISPLAY PROCESSING            │
    │  └────────────────┬─────────────────────┘
    │                   ▼
    │            ◇───────────────◇
    │   NO      ╱   TERMINATE?     ╲    S5
    └─────────◇                     ◇
               ╲                   ╱
                ◇─────────────────◇
                        │ YES
                        ▼
                ┌───────────────┐
                │      END       │
                └───────────────┘
```

Fig. 22

Fig. 23

```
                    ┌─────────────┐
                    │    START    │
                    └─────────────┘
                           │
                           ▼
      S41 ┌───────────────────────────────┐
          │      INITIAL PROCESSING        │
          └───────────────────────────────┘
                           │
      ┌────────────────────┤
      │                    ▼
      │    S1 ┌───────────────────────────┐
      │       │   THE OPERATION DATA IS    │
      │       │        OBTAINED.           │
      │       └───────────────────────────┘
      │                    │
      │                    ▼
      │    S2 ┌───────────────────────────┐
      │       │     OPERATION STATE        │
      │       │  CALCULATION PROCESSING    │
      │       └───────────────────────────┘
      │                    │
      │                    ▼
      │    S3 ┌───────────────────────────┐
      │       │      MOVING PROCESSING     │
      │       └───────────────────────────┘
      │                    │
      │                    ▼
      │    S4 ┌───────────────────────────┐
      │       │     DISPLAY PROCESSING     │
      │       └───────────────────────────┘
      │                    │
      │                    ▼
      │              ╱IS THE╲
      │   NO    ╱KEY LOCATED IN THE KEY╲  S42
      ◄────────         ╲HOLE?╱
      │              ╲     ╱
      │                 │ YES
      │                 ▼
      │          ╱IS THE KEY╲
      │  NO  ╱AT THE PREDETERMINED╲  S43
      └──────      ╲POSTURE?╱
                    ╲    ╱
                      │ YES
                      ▼
      S44 ┌───────────────────────────┐
          │  THE DOOR IS DISPLAYED AS   │
          │       BEING OPENED.         │
          └───────────────────────────┘
                      │
                      ▼
                ┌───────────┐
                │    END     │
                └───────────┘
```

Fig. 24

```
        ┌─────────────────┐
        │     MOVING      │
        │   PROCESSING    │
        └─────────────────┘
                 │
                 ▼
        ┌─────────────────────────┐
S45     │ THE POSTURE IS CALCULATED│
        │ BASED ON THE DIRECTION.  │
        └─────────────────────────┘
                 │
                 ▼
        ┌─────────────────────────┐
        │ THE INDICATED POSITION IS│
S46     │ CALCULATED BASED ON THE  │
        │ COORDINATE SET OF THE    │
        │ INTERMEDIATE POINT.      │
        └─────────────────────────┘
                 │
                 ▼
        ┌─────────────────────────┐
        │ THE POSITIONS IN THE X-AXIS│
S47     │ AND Y-AXIS DIRECTIONS ARE│
        │ DETERMINED BASED ON THE  │
        │ INDICATED POSITION.      │
        └─────────────────────────┘
                 │
                 ▼
        ┌─┬─────────────────────┬─┐
S48     │ │ DISTANCE CALCULATE  │ │
        │ │    PROCESSING       │ │
        └─┴─────────────────────┴─┘
                 │
                 ▼
        ┌─────────────────────────┐
        │ THE POSITION IN THE Z-AXIS│
S49     │ DIRECTION IS DETERMINED  │
        │ BASED ON THE DISTANCE.   │
        └─────────────────────────┘
                 │
                 ▼
          ┌─────────────┐
          │   RETURN    │
          └─────────────┘
```

Fig. 25

```
        ┌────────────────────────┐
        │  DISTANCE CALCULATE    │
        │     PROCESSING         │
        └────────────────────────┘
                    │
                    ▼
        ┌────────────────────────┐
        │ THE WIDTH OF THE IMAGING│
S481    │   POSSIBLE RANGE IS     │
        │     CALCULATED.         │
        └────────────────────────┘
                    │
                    ▼
        ┌────────────────────────┐
S482    │   THE DISTANCE IS       │
        │    CALCULATED.          │
        └────────────────────────┘
                    │
                    ▼
        ┌────────────────────────┐
        │        RETURN           │
        └────────────────────────┘
```

Fig. 26A

Fig. 26B

Fig. 27

Fig. 28

CURRENT OPERATION DATA — 50

CURRENT FIRST
COORDINATE SET DATA — 51

CURRENT SECOND
COORDINATE SET DATA — 52

•
•
•

PREVIOUS OPERATION DATA — 53

PREVIOUS FIRST
COORDINATE SET DATA — 54

PREVIOUS SECOND
COORDINATE SET DATA — 55

OPERATION STATE DATA — 56

DIRECTION DATA — 57

INTERMEDIATE POINT DATA — 58

OPERATION PROCESSING
DATA — 60

DIRECTION PROCESSING
DATA — 61

INDICATED COORDINATE SET
DATA — 62

CORRESPONDING
COORDINATE SET DATA — 67

REFERENCE DIRECTION DATA — 68

OPERATION TARGET DATA — 64

POSTURE DATA — 65

POSITION DATA — 66

•
•
•

Fig. 29

```
           ┌─────────────┐
           │    START    │
           └──────┬──────┘
                  │
                  ▼
       ┌──────────────────────┐
  S50  │ A VIRTUAL GAME SPACE  │
       │     IS CONSTRUCTED.   │
       └──────────┬───────────┘
                  │
                  ▼
       ┌──────────────────────┐
  S51  │ THE REFERENCE         │
       │ DIRECTION IS SET.     │
       └──────────┬───────────┘
                  │
                  ▼
       ┌──────────────────────┐
  S1   │ THE OPERATION DATA    │
       │ IS OBTAINED.          │
       └──────────┬───────────┘
                  │
                  ▼
       ┌──────────────────────┐
  S2   │ OPERATION STATE       │
       │ CALCULATION PROCESSING│
       └──────────┬───────────┘
                  │
                  ▼
       ┌──────────────────────┐
  S3   │  MOVING PROCESSING    │
       └──────────┬───────────┘
                  │
                  ▼
       ┌──────────────────────┐
  S4   │  DISPLAY PROCESSING   │
       └──────────┬───────────┘
                  │
                  ▼
         ◇ TERMINATE? ◇  S5
          NO │     │ YES
             │     ▼
             │  ┌──────┐
             │  │ END  │
             │  └──────┘
```

Fig. 30

```
                    ╭─────────────╮
                    │   MOVING    │
                    │ PROCESSING  │
                    ╰──────┬──────╯
                           ▼
            ┌─────────────────────────────┐
     S52 ───┤ THE INDICATED POSITION IS   │
            │        CALCULATED.          │
            └──────────────┬──────────────┘
                           ▼
            ┌─────────────────────────────┐
            │      THE POSITION IN THE    │
     S53 ───┤ THREE-DIMENSIONAL SPACE     │
            │ CORRESPONDING TO THE        │
            │ INDICATED POSITION IS       │
            │        CALCULATED.          │
            └──────────────┬──────────────┘
                           ▼
            ┌─────────────────────────────┐
            │ THE ANGULAR DIFFERENCE IS   │
     S54 ───┤        CALCULATED.          │
            └──────────────┬──────────────┘
                           ▼
            ┌─────────────────────────────┐
            │  THE ROTATION AMOUNT IS     │
     S55 ───┤ DETERMINED IN ACCORDANCE    │
            │    WITH THE ANGULAR         │
            │       DIFFERENCE.           │
            └──────────────┬──────────────┘
                           ▼
            ┌─────────────────────────────┐
            │    THE POST-ROTATION        │
     S56 ───┤ POSITION IS CALCULATED.     │
            └──────────────┬──────────────┘
                           ▼
                    ╭─────────────╮
                    │   RETURN    │
                    ╰─────────────╯
```

Fig. 31

Fig. 32

```
                    ┌─────────────┐
                    │    START    │
                    └──────┬──────┘
                           │
          ┌────────────────▼────────────────┐
    S61   │       INITIAL PROCESSING        │
          └────────────────┬────────────────┘
                           │
   ┌──────────────────────►│
   │      ┌────────────────▼────────────────┐
   │  S1  │    THE OPERATION DATA IS         │
   │      │          OBTAINED.               │
   │      └────────────────┬────────────────┘
   │      ┌────────────────▼────────────────┐
   │  S2  │      OPERATION STATE             │
   │      │   CALCULATION PROCESSING         │
   │      └────────────────┬────────────────┘
   │      ┌────────────────▼────────────────┐
   │ S62  │   THE INDICATED COORDINATE       │
   │      │      SET IS CALCULATED.          │
   │      └────────────────┬────────────────┘
   │      ┌────────────────▼────────────────┐
   │      │     THE POSITION OF THE          │
   │ S63  │     CURSOR IS UPDATED.           │
   │      └────────────────┬────────────────┘
   │                       │
   │                  ◇────▼────◇          NO
   │          S64    ◇  IS THE   ◇──────────┐
   │                 ◇ OBJECT    ◇          │
   │                 ◇DESIGNATED?◇          │
   │                  ◇────┬────◇           │
   │                       │ YES            │
   │      ┌────────────────▼────────────────┐
   │      │  THE DESIGNATED OBJECT IS        │
   │      │  SET AS THE OPERATION            │
   │ S65  │        TARGET.                   │
   │      └────────────────┬────────────────┘
   │      ┌────────────────▼────────────────┐
   │  S3  │      MOVING PROCESSING           │
   │      └────────────────┬────────────────┘
   │                       │◄───────────────┘
   │      ┌────────────────▼────────────────┐
   │  S4  │      DISPLAY PROCESSING          │
   │      └────────────────┬────────────────┘
   │                       │
   │                  ◇────▼────◇
   │                 ◇  IS THE   ◇
   │                 ◇ OBJECT AT  ◇
   │                 ◇ THE         ◇── S66
   │                 ◇PREDETERMINED◇
   │          NO     ◇ POSTURE?   ◇
   └─────────────────◇────┬────◇
                          │ YES
          ┌───────────────▼─────────────────┐
    S67   │  THE DOOR IS DISPLAYED AS        │
          │      BEING OPENED.               │
          └───────────────┬─────────────────┘
                          │
                   ┌──────▼──────┐
                   │     END     │
                   └─────────────┘
```

**REFERENCES CITED IN THE DESCRIPTION**

**Patent documents cited in the description**

- JP 6308879 A
- JP 8071252 A